(19) Europäisches Patentamt / European Patent Office / Office européen des brevets

(11) **EP 4 657 274 A1**

(12) **EUROPEAN PATENT APPLICATION**
published in accordance with Art. 153(4) EPC

(43) Date of publication:
**03.12.2025 Bulletin 2025/49**

(21) Application number: **24747107.1**

(22) Date of filing: **11.01.2024**

(51) International Patent Classification (IPC):
**G06F 16/22** *(2019.01)*

(52) Cooperative Patent Classification (CPC):
**G06F 16/22**

(86) International application number:
**PCT/JP2024/000399**

(87) International publication number:
**WO 2024/157776 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.01.2023 JP 2023010716
27.01.2023 JP 2023010717**

(71) Applicant: **Furusho, Shinji
Yokohama-shi, Kanagawa 221-0005 (JP)**

(72) Inventor: **Furusho, Shinji
Yokohama-shi, Kanagawa 221-0005 (JP)**

(74) Representative: **Epping - Hermann - Fischer
Patentanwaltsgesellschaft mbH
Schloßschmidstraße 5
80639 München (DE)**

(54) **DATA PROCESSING DEVICE, DATA PROCESSING METHOD, AND PROGRAM**

(57) A data processing device according to one aspect of the present disclosure includes a data operation unit configured to perform, on virtual tabular data including a virtual column having a second data structure obtained by converting a first data structure of one or more columns included in one or more tabular data by a predetermined mapping, a sort operation, a search operation, or an aggregation operation using the second data structure as an index.

FIG.1

**Description**

TECHNICAL FIELD

This disclosure relates to a data processing device, a data processing method, and a program.

BACKGROUND

In recent years, due to the development of various sensor devices, observation devices, or the like, tabular data in which a large amount of data (what is called big data) representing sensing results, observation results, or the like are stored can be obtained. Thus, there is an increasing need to select a plurality of columns from one or more tabular data to create virtual tabular data for one's own purpose of use (hereinafter referred to as virtual tabular data). One method to achieve such a need is to use a technique called virtual database or data virtualization (see, for example, Non-Patent Document 1). In those technologies, when a query is received from a user, a subquery is executed to backend distributed databases.

Related Art Document

Non-Patent Document

Non-Patent Document 1: [Data Hub vs Data Lake vs Data Virtualization - MarkLogic], Internet <URL: https://jp. marklogic.com/product/comparisons/data-hub-vs-data-lake/>

SUMMARY OF THE INVENTION

Problem to be solved by the invention

However, in a technology called virtual database or data virtualization, a virtual database cannot inherit indexes that realize sorting, searching, and aggregation of real databases.
The present disclosure has been made in view of the above points, and provides a technique that enable virtual tabular data to inherit indexes that realize sorting, searching, and aggregation of real tabular data.

Means for Solving the Problem

A data processing device according to one aspect of the present disclosure includes a data operation unit configured to perform, on virtual tabular data including a virtual column having a second data structure obtained by converting a first data structure of one or more columns included in one or more tabular data by a predetermined mapping, a sort operation, a search operation, or an aggregation operation using the second data structure as an index.

Effect of the invention

A technique that enables virtual tabular data to inherit indexes that realize sorting, searching, and aggregation of real tabular data can be provided.

BRIEF DESCRIPTION OF THE DRAWINGS

[FIG. 1] FIG. 1 is a diagram for explaining an example of virtual tabular data that is constructed hierarchically starting from D5A that hold values.
[FIG. 2] FIG. 2 is a diagram for explaining an example (1) of a mapping A.
[FIG. 3] FIG. 3 is a diagram for explaining an example (2) of the mapping A.
[FIG. 4] FIG. 4 is a diagram for explaining an example of D5A.
[FIG. 5] FIG. 5 is a diagram for explaining an example of assignment.
[FIG. 6] FIG. 6 is a diagram for explaining an example of assignment using an enumerated mapping.
[FIG. 7] FIG. 7 is a diagram for explaining an example of assignment using a linear functional mapping.
[FIG. 8] FIG. 8 is a diagram illustrating an example of source columns and a virtual column.
[FIG. 9] FIG. 9 is a diagram illustrating an example of source columns, inverted structures, and a virtual inverted structure.

[FIG. 10] FIG. 10 is a diagram for explaining an example of an assignment mapping of two hierarchical levels of the virtual tabular data.

[FIG. 11] FIG. 11 is a diagram for explaining examples of virtual inverted structures of two hierarchical levels of the virtual tabular data.

[FIG. 12] FIG. 12 is a diagram illustrating an example of an overall configuration of a system including a data processing device according to the present embodiment.

[FIG. 13] FIG. 13 is a diagram illustrating an example of a hardware configuration of the data processing device according to the present embodiment.

[FIG. 14] FIG. 14 is a flowchart illustrating an example of a flow of a virtual tabular data creation process.

[FIG. 15] FIG. 15 is a flowchart illustrating an example of a flow of a sort process in the virtual tabular data.

[FIG. 16] FIG. 16 is a flowchart illustrating an example of a flow of a search process in the virtual tabular data.

[FIG. 17] FIG. 17 is a flowchart illustrating an example of a flow of an aggregation process in the virtual tabular data.

DESCRIPTION OF THE EMBODIMENTS

An embodiment of the present invention will be described below. In the following embodiment, first, data called D5A representing tabular data is defined after necessary explanations and definitions are provided. Next, a method of creating a new virtual tabular data from D5As or other virtual tabular data, and a method of inheriting indexes of (real) tabular data to perform sorting, searching, and aggregation on virtual tabular data will be described. Additionally, at this time, it will also be described that the indexes can be inherited even when the virtual tabular data is hierarchically constructed. Finally, a data processing device 10 capable of creating virtual tabular data, sorting it, searching it, and aggregating it will be described.

<Introduction>

The accumulation of archived data, including Internet of Things (IoT) data, various observation data, log data, and the like, continues to grow. In many of these data, data is merged into one piece of tabular data at regular intervals, such as daily or monthly, and added to the archive. The tabular data added to the archive can be considered as ReadOnly. The tabular data in such archives can be huge and often distributed over a local area network (LAN) and Internet.

There are problems that the following two steps are generally required to utilize the tabular data in the above-described archives, and both of these steps take a long time and often consume a large storage area.

The first step is a step to generate new tabular data. The new tabular data is created by performing UNION or JOIN on multiple tabular data, or extracting only necessary columns. If the original tabular data is huge or distributed over a wide area network such as the Internet, it takes a long time. Additionally, if the new tabular data is huge, a large storage area is required to store it.

The second step is a step to perform sorting, searching, or aggregation. Newly created tabular data is not indexed, and thus it takes time to perform sorting, searching, and aggregation. In addition, a sort result when the new tabular data is large, a search result when the number of hits is large, and a large aggregation result all require large storage areas.

Today, the problems of the above-described two steps are becoming increasingly severe day by day as archived data continues to grow in volume and as the demand for using distributed archived data rises.

Therefore, we propose a technique that reduces the time required for the operations of the above-described two steps to the time required for interactive operations, and requires only a small storage area. The target tabular data, which is the operation target, may have, for example, one trillion records or one hundred thousand columns. Additionally, the operation-target tabular data may be hierarchically formed through UNIONS and JOINs. Furthermore, the operation-target tabular data may be distributed across a LAN or across multiple HTTP (Hypertext Transfer Protocol) servers on the Internet.

The above becomes possible because a network system of mappings for archived data can be constructed using a file format for tabular data referred to as D5A, in which all columns are provided with indexes that speed up sorting, searching, and aggregation; virtual tabular data whose values are directly or indirectly inherited from a D5A file; and a virtual index on the virtual tabular data, the virtual index being realized using a data structure that is automatically established by directly or indirectly inheriting a data structure used by the index of the D5A file. The virtual tabular data and the virtual index are immediately available only by connecting directly or indirectly to D5A and consume only a small amount of storage space. In addition, sort results, search results, and aggregation results obtained using the virtual index require only a small amount of storage space, no matter how large they are.

Such a network of the mapping of the archived data using D5A enables a new method of using archived data, that is, "A user creates virtual tabular data according to each purpose of use and uses archived data distributed on the network interactively". For example, in an organization, it enables archived data distributed in departments within the organization to be used for various purposes, and in the Internet, it enables archived data such as IoT data from various parts of the world to be combined, extracted, and used in various interconnected ways.

Here, the terms used in this specification are clarified. First, D5A format is a tabular data file format in which all columns are indexed to speed up sorting, searching, and aggregation. Second, the virtual tabular data is tabular data that inherits values from D5A files (file in D5A format) or other virtual tabular data. Here, a tabular data that is the inheritance source is called source tabular data. Additionally, a column on D5A is called a D5A column, and an index on the D5A column that speeds up sorting, searching, and aggregation is called a D5A index. Similarly, in the virtual tabular data, a column and an index are also referred to as a virtual column and a virtual index. Similarly, in the source tabular data, a column and an index are also referred to as a source column and a source index. Additionally, the data structure used by the D5A index is called an inverted structure, the data structure used by the virtual index is called a virtual inverted structure, and the data structure used by the source index is called a source inverted structure. Here, the virtual tabular data may be called "mapped tabular data" and the like, and similarly, virtual column may be called a "mapped column" and the like.

<Solution to the Problems>

As described above, when attempting to utilize tabular data in an archive, there is generally a problem in that two steps-the first step and the second step-are required, and that each of these steps often takes a long time and consumes a large amount of storage space.

The first step is a step of generating new tabular data by performing a UNION, a JOIN, or extracting only the necessary columns.

The second step is a step of performing sorting, searching, or aggregation.

The first step takes a long time because it takes time to read and compare values and store them. Thus, as an alternative, there is tabular data to be used as source tabular data, new tabular data is created by using a mapping defined by a correspondence table and a rule that specify which cells of the source tabular data are to be mapped to which cells of the newly created tabular data. In the case of archived data, there are many cases where the mapping can be defined and can be compactly represented. In this case, the new tabular data does not need to have values, and this advantage is especially great when the new tabular data is large. This is because the new tabular data can be displayed in a small amount of time to load the mapping definition, and requires only a small amount of storage space to hold the mapping definition. This new tabular data is virtual tabular data because it does not hold values and inherits these values from the original tabular data. Such virtual tabular data can solve the problems of the first step.

In the second step, it takes time because of two reasons, that is, the columns of the newly created tabular data are not indexed, and it takes time to write out sort results, search results, and aggregation results, which are often large. However, the time-consuming problem is solved by two things, that is, all columns of the above-described virtual tabular data automatically have virtual indexes to speed up sorting, searching, and aggregation of the columns, and these virtual indexes can reduce the write time by using only a small amount of storage space to hold values even if the sort, search, and aggregation results are large.

Additionally, the storage space problem is also solved because the virtual index uses only a small amount of storage space to store these results. In such a way, the problems of the second step can be solved by the virtual index.

A D5A file, which is expressed in the tabular data storage format called D5A, holds the values that serve as the sources of the virtual tabular data, and the data structures that serve as the sources of the data structures used by the virtual index.

<<D5A: A Tabular Data Storage Format That Serves as the Source of Values and Indexes>>

The virtual tabular data inherits values from one or more source tabular data. The source tabular data is either another virtual tabular data or tabular data called a D5A file. In the former case, the virtual tabular data inherits values from yet another source tabular data and finally reaches the D5A file. Therefore, it can be said that the virtual tabular data is hierarchically constructed by directly or indirectly inheriting values from the D5A file.

The virtual index uses a virtual inverted structure to speed up sorting, searching, and aggregation. The virtual inverted structure is automatically established by inheriting one or more source inverted structures. The source inverted structure is either a virtual inverted structure on another virtual tabular data or an inverted structure on a D5A file. In the former case, the virtual inverted structure inherits yet another source inverted structure and finally reaches an inverted structure on a D5A file. Therefore, it can be said that the virtual inverted structure is hierarchically constructed by directly or indirectly inheriting an inverted structure on a D5A file.

The D5A format is a tabular data storage format that provides values to virtual tabular data, and also provides inverted structures to virtual inverted structures. It retains the values and includes, for each of its columns, a D5A index-an index that uses an inverted structure.

<<Realization of a Network System of Mappings over Archived Data>>

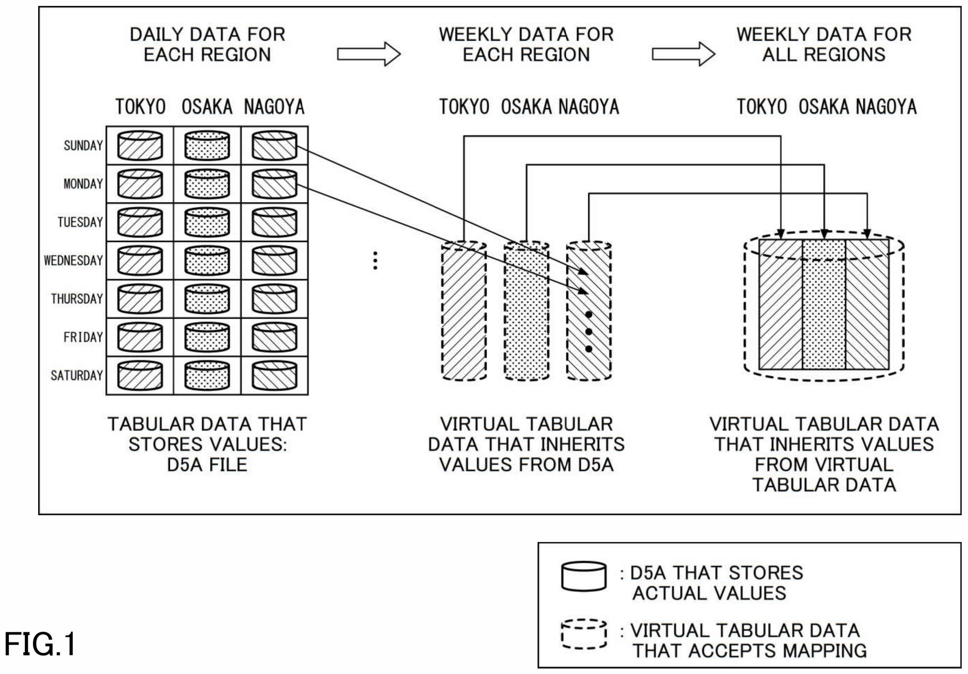

A simple example of a network system of mappings for archived data is shown below. With reference to FIG. 1, a method of using D5A, virtual tabular data, and virtual indexes, as described so far, will be explained. FIG. 1 illustrates a process of combining meteorological observation data from Sunday to Saturday in the regions: Tokyo, Osaka, and Nagoya. This process is performed in two stages; first, seven pieces of daily data are combined into weekly data for each region, and then, these pieces of weekly data are arranged side by side and consolidated into one tabular data. Here, the 21 daily datasets-corresponding to one week of data from three regions on the left side of FIG. 1-are each stored in a 55A file. The three tabular data for the regions at the center of FIG. 1 are virtual tabular data. These virtual tabular data are constructed by extracting necessary columns from seven D5A files-corresponding to one week, as shown on the left side of FIG. 1-by using the seven D5A files as the source tabular data and performing UNION on them. One virtual tabular data on the right side of FIG. 1 is obtained by using three virtual tabular data for the regions in the center of FIG. 1 as the source tabular data and arranging them side by side.

As shown in FIG. 1, the network system of mappings over archived data is hierarchically built upon D5A files through virtual tabular data. As described earlier, the virtual tabular data automatically has a virtual index, and any column can be sorted, searched, and aggregated in a short time, and the storage area required to store the sort, search, and aggregation results is small. Such virtual tabular data can be created and used by users within the users' environment, and it is expected to promote widespread use of archived data.

<Mapping A>

D5A, the virtual tabular data, and the virtual index are all described by a combination of mappings from a continuous interval of natural numbers starting from 0 to values (which are also natural numbers in many cases). This mapping can be represented by a one-dimensional array whose index starts from 0, and thus it is called the mapping A. By using the mapping A, the correspondence relationship can be viewed from the whole, and as a result, algorithms using the properties of sets and groups can be derived. The advantages of the mapping A will be described below.

The first advantage of the mapping A is that a new mapping A can be created by composing mappings A in various ways. For example, composing S, which is a mapping A representing the search result column, with $C_A$, which is a mapping A representing column A, yields a mapping A representing the search result of column A; composing S with $C_B$, which is a mapping A representing column B, yields a mapping A representing the search result of column B. In this case, S can be any mapping A representing a result column, and $C_A$ and $C_B$ can be any mapping A representing a column. They may be present on a local storage device or a network. Such a composition of the mappings A can be regarded as an algebraic composition.

The result of composing the mapping A with the mapping A need not necessarily be written to the storage area, but may be a virtual mapping A. A virtual mapping A is a mapping A constructed from one or more mappings A as composition sources, in such a way that the size of the overall mapping is known, and any required i-th element can be retrieved from the composition sources. The virtual mapping A is also the mapping A, and thus another virtual mapping A can be created hierarchically by composing virtual mappings A. A column of virtual tabular data is a kind of the virtual mapping A, and can be created hierarchically. The index is a mechanism implemented by a data structure for the index and algorithms that use the data structure. The virtual index is an index that uses one or more virtual mappings A as a data structure for the index, and can be created hierarchically.

The second advantage of mapping A is that it can be decomposed to generate new mappings A. By decomposing the mapping A, a new mapping A that has a function not available in the mapping A before decomposition can be created and used. One of the most effective decompositions is the LP decomposition (decomposition into L and P, which are the mappings A) of M which is the mapping A that determines a correspondence (mapping) from a cell to a cell between tabular data. When M is decomposed into L and P, efficient element search by bisection search can be performed in L, and inverse mapping can be obtained in P. In this case, M can be any mapping A that determines the mapping, L automatically becomes the mapping A that can perform bisection search, and P automatically becomes the mapping A that has an inverse. Decomposition of the mapping A creates new mappings A, and thus it can be called an algebraic decomposition.

With respect to the above, the mapping A is a one-dimensional array, and thus it takes time to insert an element into a large mapping A and to delete an element. However, this disadvantage is not a problem because archived data is rarely updated.

By using such a mapping A, it becomes possible to design D5A as a tabular data storage format in which every column is uniformly equipped with an index that enables high-speed sorting, searching, and aggregation. Then, we can define virtual tabular data using D5A and mapping A. The virtual tabular data is automatically provided with virtual indexes, each of which uses one or more mappings A as a data structure for indexing. Thus, it becomes possible to implement a network system of mappings over archived data, enabling archive data distributed across the network to be combined and utilized in various ways.

Therefore, in the following, mapping A will first be defined and its notation defined. Next, an index operator, which is an operator for composing mappings A, will be introduced. Next, the decomposition of the mapping A will be described, and the SN decomposition, LP decomposition, and spectral decomposition, which are especially important, will be described. Finally, the mapping A is classified in four aspects.

<<Definition of Mapping A >>

Consider a one-dimensional array of size N with indices starting from 0. This one-dimensional array can be regarded as a mapping whose domain is a continuous interval of natural numbers from 0 to N-1, and whose codomain is at most N distinct discrete intervals. This is called the mapping A. If records have consecutive record numbers starting from 0, a column of tabular data can also be regarded as a mapping A whose domain is the record numbers starting from 0.

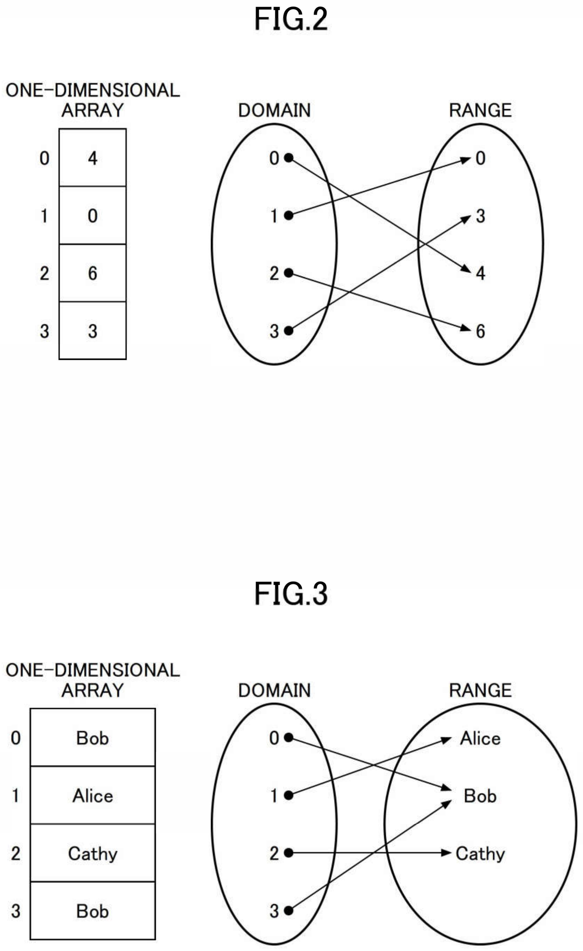

For example, as illustrated in FIG. 2, consider a one-dimensional array that stores "4" as the zeroth element, "0" as the first element, "6" as the second element, and "3" as the third element. This one-dimensional array associates 0 with "4", 1 with "0", 2 with "6", and 3 with "3", and thus it can be regarded as a mapping A whose domain is {0, 1, 2, 3} and whose range is {0, 3, 4, 6}.

Additionally, for example, as illustrated in FIG. 3, consider a one-dimensional array that stores "Bob" as the zeroth element, "Alice" as the first element, "Cathy" as the second element, and "Bob" as the third element. This one-dimensional array associates 0 with "Bob", 1 with "Alice", 2 with "Cathy", and 3 with "Bob", and thus can be regarded as the mapping A whose domain is {0, 1, 2, 3} and whose range is {Alice, Bob, Cathy}.

It is to be noted that mapping A can be represented as a one-dimensional array. When discussing its nature as a mapping, it shall be referred to as a mapping, whereas when discussing its operations, it shall be referred to as an array. Accordingly, when treated as a mapping, the terms "domain" and "range" shall be used, whereas when treated as an array including columns or tabular data, the terms "record number" and "value" shall be used. However, the notation of mapping A shall be expressed, wherever possible, using array-based notation.

<<Notation of Mapping A>>

The notation of mapping A, which adopts general array notation, will be described below.

Notation 1. When defining the mapping A by enumerating its elements, it is written as $(a_0, a_1, ..., a_{n-1})$.

Notation 2. When explicitly specifying the domain size n of mapping A, it is written as $A_{(n)}$. According to this notation, a column, for example, may be written as $C_{(R)}$, where R represents the total number of records.

Notation 3. When it is known that the range of mapping A lies on the natural numbers and that the maximum value does not exceed n-1, the notation $A^{(n)}$ is used to explicitly indicate the range.

Notation 4. The i-th element of $A_{(n)}$ (mapping A), is denoted as $A_{(n)}[i]$. Therefore, $A_{(n)} \equiv (A_{(n)}[0], A_{(n)}[1], ..., A_{(n)}[n-1])$.

Notation 5. The concatenation of $(i_0, i_1, ...)$, $(j_0, j_1, ...)$, and so on, is written as $(i_0, i_1, ...) + (j_0, j_1, ...) + ....$

Notation 6. When an element $\lambda$ in the codomain of mapping A accepts a mapping from elements $i_0, i_1$, in the domain, it is denoted as $\lambda: (i_0, i_1, ...)$. For example, the case illustrated in FIG. 3 may be written as Alice: (1), Bob: (0, 3), and Cathy: (2).

Notation 7. When $\lambda_0: (i_0, i_1, ...), \lambda_1: (j_0, j_1, ...)$ and so on are concatenated, the symbol "+" is used, and it is written as $\lambda_0: (i_0, i_1, ...) + \lambda_1: (j_0, j_1, ...) + ....$ In this case, the entries are arranged in the order $\lambda_0 < \lambda_1 < ....$ For example, the case illustrated in FIG. 3 may be written as Alice: (1) +Bob: (0, 3) + Cathy: (2).

<<Index Operator for Composing Mappings A>>

An operator "·" called an index operator that composes mappings A to create a new mapping A is defined below.

$$A_{(n)} \cdot B_{(m)}^{(n)} = (A_{(n)}[B_{(m)}^{(n)}[0]], ..., A_{(n)}[B_{(m)}^{(n)}[m-1]]) \quad \text{Equation (1)}$$

The above index operator has the following properties 1 to 3.

Property 1: The associative law holds. That is, $(A_{(n)} \cdot B_{(m)}) \cdot C_{(k)} = A_{(n)} \cdot (B_{(m)} \cdot C_{(k)})$ is established.

Property 2: The size of the array representing the composition result is the size of the array on the right side.

Property 3: The data type of the array representing the composition result is the data type of the array on the left side.

Here, an example is used to verify the associative law. Let $A_{(3)} = $ (Alice, Bob, Cathy), $B_{(4)} = (1, 0, 2, 1)$ and $C_{(3)} = (0,$

2, 1). In this case, $(A_{(3)}, B_{(4)}) \cdot C_{(3)}$ =(Bob, Alice, Cathy, Bob) $\cdot$ (0,2,1) = (Bob, Cathy, Alice). With respect to the above, $A_{(3)} \cdot (B_{(4)}, C_{(3)})$ = (Alice, Bob, Cathy) $\cdot$ (1,2,0) = (Bob, Cathy, Alice), and both are identical.

Due to the above-described properties 1 and 2, the number of distinct values that can appear in the mapping A obtained as a result of composing mappings A by the index operator is less than or equal to the size of the smallest mapping A among the mappings A composed by the index operator. This serves as an indicator similar to the rank in a matrix.

<<Decomposition of Mapping A>>

When the mappings A are composed using the index operator, only one mapping A is obtained. On the other hand, a single mapping A can be decomposed into various mappings A. For example, (Bob, Alice, Cathy, Bob) can be decomposed as (Bob, Alice, Cathy, Bob) = (Alice, Bob, Cathy) $\cdot$ (1, 0, 2, 1) or (Bob, Alice, Cathy, Bob) = (Bob, Alice, Cathy) $\cdot$ (0, 1, 2, 0).

In such a situation, a method of unique decomposition has special value, and can speed up sorting and searching, and can obtain an inverse mapping. Therefore, in the following, SN decomposition, LP decomposition, and spectral decomposition, which are methods of unique decomposition, will be described.

•SN decomposition

When decomposing a single mapping A into two, there is only one way to do so if the left-hand mapping A among the two resulting mappings contains only the values that appear in the original (left-hand side) mapping A, and these values are held uniquely and in ascending order. This decomposition is called SN decomposition.

For example, (Bob, Alice, Cathy, Bob) = (Alice, Bob, Cathy) $\cdot$ (1, 0, 2, 1) is an example of the SN decomposition.

The first term on the right-hand side, which is unique and sorted in ascending order, is called a Sorted Value List (SVL). In the above example, SVL = (Alice, Bob, Cathy). The second term on the right-hand side can be considered as a replacement of each element on the left-hand side with its storage position in the SVL. This is called a Natural Numbered Column (NNC). In the above example, NNC = (1, 0, 2, 1).

A general definition of such SN decomposition is as follows.

$$C_{(R)} = SVL_{(K)} \cdot NNC_{(R)}{}^{(K)};$$

$$i, j \in 0, ..., K\text{-}1 \text{ and } i < j \Rightarrow SVL_{(K)}[i] < SVL_{(K)}[j]$$

Equation (2)

In Equation (2), the upper part indicates that the column $C_{(R)}$ is decomposed into $SVL_{(K)}$ and $NNC_{(R)}{}^{(K)}$, and the lower part indicates that the elements of $SVL_{(K)}$ are arranged in ascending order. The notation $NNC_{(R)}{}^{(K)}$ indicates a mapping A of size R whose elements are natural numbers from 0 to K-1.

Using SN decomposition, NNC, which is the mapping A whose elements are natural numbers, can be extracted from the mapping A whose elements are not necessarily natural numbers. Using the extracted NNC, efficient algorithms using the properties of natural numbers such as counting sort can be used.

(SN Decomposition Algorithm)

Here, an example of the SN decomposition algorithm is described using (Bob, Alice, Cathy, Bob) as an example. In the SN decomposition algorithm, the following steps 1-1 to 1-5 are performed.

Step 1-1: Attach a position in mapping A to each value of (Bob, Alice, Cathy, Bob) to create ((Bob, 0), (Alice, 1), (Cathy, 2), (Bob, 3)).

Step 1-2: Sort the value-position pairs by comparing their values to obtain ((Alice, 1), (Bob, 0), (Bob, 3), (Cathy, 2)).

Step 1-3: Assign a value number to each value from 0 in ascending order of their values to obtain a sort result ((Alice = 0, 1), (Bob = 1, 0), (Bob = 1, 3), (Cathy = 2, 2)).

It should be noted that, in the above example, the same value "Bob" appears twice, but value number 1 is assigned to each "Bob." Also, the above sorted result has the structure ((value = value number, position in mapping A), ...). For example, in the first element (Alice = 0, 1) of the sorted result in the above example, the value is Alice, the value number is 0, and the position in mapping A is 1.

Step 1-4: Using the above sorted result, allocate a storage area for SVL (the area size is 3), and write "SVL[value number] = value." That is, SVL[0] = Alice, SVL[1] = Bob, and SVL[2] = Cathy. Thus, SVL = (Alice, Bob, Cathy) is completed.

Step 1-5: Allocate an NNC storage area (the area size is 4) by using the above sorted result, and write "NNC[position in the mapping A] = value-number." That is, NNC[1] = 0, NNC[0] = 1, NNC[3] = 1, and NNC[2] = 2. Thus NNC = (1, 0, 2, 1) is completed.

As described above, (Bob, Alice, Cathy, Bob) = (Alice, Bob, Cathy) · (1, 0, 2, 1) are obtained.

•LP decomposition

LP decomposition is a special case of the SN decomposition that decomposes M(a mapping A whose elements are natural numbers without duplication, called a Mapping Projection) into two. For example, (5, 2, 7, 3) = (2, 3, 5, 7) · (2, 0, 3, 1) is an example of LP decomposition.

The first term on the right-hand side obtained by the LP decomposition consists of natural numbers that are unique and in ascending order. This is called L (seLection). In the above example, L= (2, 3, 5, 7).

The second term on the right-hand side can be regarded as a replacement of each element on the left-hand side with its storage position in L. This is called P (Permutation). In the above example, P = (2, 0, 3, 1). In LP decomposition, M, L, and P have the same size.

When the LP decomposition is performed, the existence of the element and the rank of the elements in M can be determined using L, and the inverse elements can be obtained using P. Note that the LP decomposition can be performed using the same algorithm as the SN decomposition.

•Spectral decomposition

Notation 7 described above expresses, for each value, the position (index) in mapping A where that value appears, as a new mapping A. This is called the spectral decomposition of mapping A. By spectral decomposition, mapping A can be viewed from the range toward the domain, enabling various algorithms. The following describes an example where sorting, searching, and aggregation of a column (which is a mapping A) can be easily performed using spectral decomposition.

(Perform Sorting)

In the example illustrated in FIG. 3, sorting is performed by removing the values from the column's spectral decomposition Alice: (1) + Bob: (0, 3) + Cathy: (2), resulting in (1) + (0, 3) + (2). Then, concatenation as defined in Notation 5 is performed to obtain the sort result column (1, 0, 3, 2). Here, the sort result can be obtained by composing the column $C_{(R)}$ =(Bob, Alice, Cathy, Bob) and the sort result column as follows:

Sort result = $C_{(R)}$ · Sort result column = (Bob, Alice, Cathy, Bob) · (1, 0, 3, 2) =(Alice, Bob, Bob, Cathy)

(Perform Searching)

In the example illustrated in FIG. 3, to search for "Bob", the "Bob" part is identified by a bisection search from the column spectral decomposition Alice: (1) + Bob: (0, 3) + Cathy: (2), and extracted to obtain Bob: (0, 3), resulting in the search result column (0, 3). Here, the search result can be obtained by composing the column $C_{(R)}$ = (Bob, Alice, Cathy, Bob) and the search result column as follows:

$$\text{Search result} = C_{(R)} \cdot \text{Search result column} = (\text{Bob, Alice, Cathy, Bob}) \cdot (0, 3) = (\text{Bob, Bob})$$

(Perform Aggregation)

In the example illustrated in FIG. 3, for aggregation, values and their frequencies of occurrence are extracted from the column spectral decomposition Alice: (1) + Bob: (0, 3) + Cathy: (2), resulting in the aggregation result: Alice: once, Bob: twice, Cathy: once.

(General Form of Spectral Decomposition)

Here, the spectral decomposition is generally rewritten as follows.
[Ex. 1]

$$\lambda_0 < \lambda_1 < \cdots < \lambda_{K-1}; \ \sum_{i=0}^{K-1} w_i = R;$$
$$\lambda_0 : X_{0\,(w_0)}^{(R)} + \lambda_1 : X_{1\,(w_1)}^{(R)} + \cdots + \lambda_{K-1} : X_{K-1\,(w_{K-1})}^{(R)}$$

Equation (3)

In Equation (3), R is the total number of records, $\lambda$ is a key value, w is the number of inverted record numbers associated with key value $\lambda$, and X is an array of inverted record numbers.

For example, when the sorted result of the one-dimensional array illustrated in FIG. 3 is written in the form of Equation (3), it is written as follows:

$$R = 4, \ \lambda_0 = \text{Alice}, \ \lambda_1 = \text{Bob}, \ \lambda_2 = \text{Cathy}$$

$$w_0 = 1, \ w_1 = 2, \ w_2 = 1$$

$$X_{0(1)}^{(4)} = (1), \ X_{1(2)}^{(4)} = (0, 3), \ X_{2(1)}^{(4)} = (2)$$

(Spectral Decomposition Algorithm)

Here, an example of the algorithm for the spectral decomposition of mapping A is described using (Bob, Alice, Cathy, Bob) as an example. The algorithm includes the following steps 2-1 to 2-3.

Step 2-1: Add a position in mapping A to each value of (Bob, Alice, Cathy, Bob) to produce ((Bob, 0), (Alice, 1), (Cathy, 2), (Bob, 3)).

Step 2-2: Sort these value-position pairs by evaluating the magnitude relationship to obtain ((Alice, 1), (Bob, 0), (Bob, 3), (Cathy, 2)).

Step 2-3: Combine the positions in mapping A for each value, and the spectral decomposition Alice: (1) + Bob: (0, 3) +Cathy: (2) is completed.

<<Classification of Mapping A>>

Mapping A can be classified according to four criteria: associativity, searchability, whether it represents a set, and whether the inverse can be easily obtained. Understanding these classifications is helpful for understanding the explanations that follow, and thus the description is provided here.

•Associativity

A mapping A whose elements are natural numbers can be placed on both sides of the index operator. The mapping A whose elements are not natural numbers can only be placed on the left side of the index operator.

•Searchability

A mapping A whose elements are arranged in ascending order can be efficiently searched using bisection search to determine whether a specific element exists and, if so, where it is. Such a mapping A is called an ascending array. In a mapping A whose elements are both unique and in ascending order, when searching for a value, there will be exactly one match. Such a mapping A is called a unique ascending array.

•Whether It Represents a Set

A mapping A can be considered to represent a set if its elements are non-overlapping. However, this specification also assumes that the elements are natural numbers. This is because, in this specification, a set is a result column, and is defined as a mapping A whose elements are natural numbers (record numbers).

•Whether the Inverse Can Be Obtained Easily

If N is the size of mapping A, whose elements are natural numbers, and the mapping A contains all the elements with values from 0 to N-1, the inverse with respect to the index operator can be easily obtained. This is called a symmetric array. The definition of a symmetric array P is described as follows.

$$i, j \in 0, 1, ..., N\text{-}1; i \neq j \Rightarrow P_{(N)}^{(N)}[i] \neq P_{(N)}^{(N)}[j]$$

The symmetric array forms a group with respect to the index operator. Therefore, both an identity element and an inverse element exist. The inverse of P is used to identify a cell of the source tabular data from a cell of the virtual tabular data.
Identity element:

$$E = (0, 1, ..., N\text{-}1)$$

Inverse element:

$$P[i] = j \Rightarrow P^{-1}[j] = i$$

<D5A>

R denotes the number of records of the tabular data, and K denotes the number of distinct values included in the column. In this case, the tabular data is defined as including R records, which are identified from the top by numbers 0 to R-1, and one or more columns, which are identified from the left by numbers or names, where a single value is determined by one record and one column, and a single data type (for example, an integer, a floating point, a string, or the like) defined for each column. Additionally, an index being established indicates that the size W of the sort, search, and aggregation results for the target column is known, and that by specifying $i \in 0, 1, ..., W\text{-}1$, the i-th row of the sort, search, and aggregation results can be read in approximately O(log (R)) or less.
In the following, first, the internal structure of D5A will be described, then the method of retrieving values, and finally, the D5A index will be explained with related items.

<<Internal Structure of D5A>>

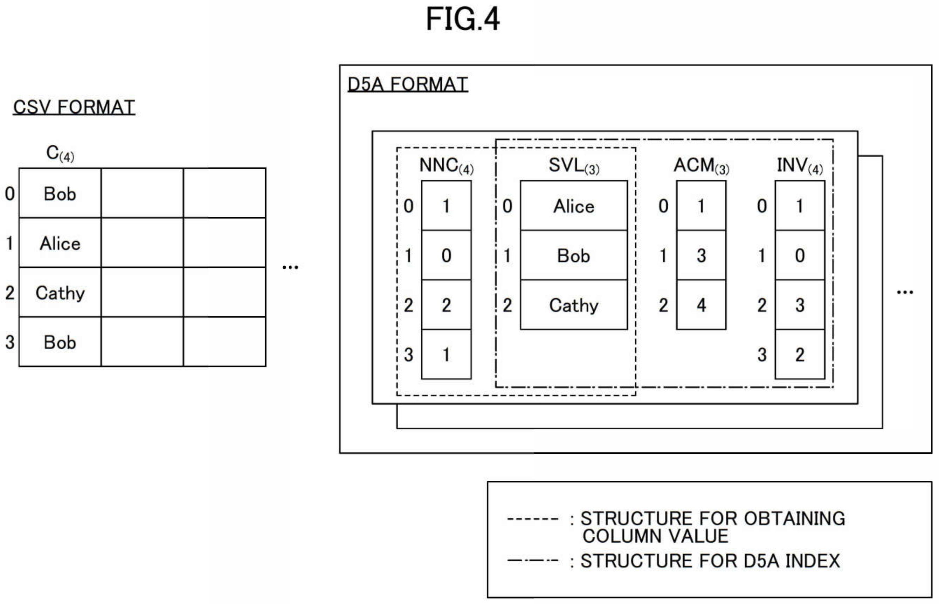

The internal structure of D5A will be described with reference to FIG. 4. FIG. 4 illustrates tabular data in comma separated values (CSV) format including the column $C_{(4)}$ =(Bob, Alice, Cathy, Bob) and its D5A format.
D5A has a structure composed of a collection of D5A columns, which have the same structure. Each of the D5A column is obtained by arranging the following two structures side by side.
The first structure is a structure for retrieving a value of the column, and is the part enclosed by the dashed line in FIG. 4. This structure is composed of (a) storing a column, which is the mapping A, as it is, (b) storing SVL and NNC obtained by performing the SN decomposition on the column, or (c) storing both.
In the case of (a) storing the column as it is, the performance of reading values is improved, but algorithms using NNC cannot be used. In the case of (b) storing SVL and NNC, algorithms using NNC can be used, but the performance of reading values degrades. In the case of (c) storing both, the size of the D5A file increases. In the present embodiment, the case of (b) is adopted.
The second structure is a structure for the D5A index, and is the part enclosed by the dash-dott line in FIG. 4. This structure consists of SVL, ACM, and INV, and is called an inverted structure. The inverted structure is obtained by rewriting the spectral decomposition of the D5A column in the form of the mapping A. The inverted structure will be described later in detail.
When the inverted structure (that is, the second structure) is obtained, it constitutes a D5A column together with the first structure described above, and
a collection of D5A columns constitutes the D5A.

<<Structure for Obtaining Column Value>>

The structure for obtaining a column value can be created by performing the SN decomposition on the column $C_{(R)}$. For example, in the example illustrated in FIG. 4, $C_{(4)}$ = (Bob, Alice, Cathy, Bob) = (Alice, Bob, Cathy) · (1, 0, 2, 1). Therefore, $SVL_{(3)}$ = (Alice, Bob, Cathy) and $NNC_{(4)}^{(3)}$ = (1, 0, 2, 1).
With respect to the above, using SVL and NNC, the column can be obtained by the following equation.

$$C_{(R)} = SVL_{(K)} \cdot NNC_{(R)}^{(K)} \quad \text{Equation (4)}$$

Therefore, the i-th row of the column can be obtained by the following equation.

$$\text{value} = C_{(R)}[i] = SVL_{(K)} \cdot NNC_{(R)}{}^{(K)}[i] \quad \text{Equation (5)}$$

For example, in the example illustrated in FIG. 4, the first row of the column is (Alice, Bob, Cathy) · (1, 0, 2, 1)[1] = Alice.

Additionally, Information 1 to Information 4 below can be obtained from SVL.

Information 1: The number K of distinct values in the column is known from $SVL_{(K)}$. For example, in the example illustrated in FIG. 4, K is three.

Information 2: The i-th value from the smallest value can be read as SVL[i].

Whether a value v exists in a column can be determined by SVL bisection search. Additionally, if the value v exists, the position of the value v is also known.

Information 4: SVL becomes the aggregation dimension. Note that to create the aggregation dimension, it was traditionally necessary to perform sorting.

<<Inverted Structure>>

Next, a method of creating the inverted structure, which is the structure for the D5A index, will be described.

As described above, sorting, searching, and aggregation can be performed at high speed by the spectral decomposition of the column, but there are two challenging aspects of the spectral decomposition. The first challenging aspect is that access cannot be performed using the index operator because it is not the mapping A (the first problem). The second aspect is that it is necessary to search for the i-th element while adding $w_0$, $w_1$, ... to obtain the i-th column of the sorted result column (the second problem). The inverted structure is obtained by converting the spectral decomposition into three mappings A, and it solves these two aspects. The definition and the composition method of the inverted structure will be described below.

- Definition of the inverted structure and creation method from the spectral decomposition The definition of the inverted structure is as follows.

[Ex. 2]

$$< SVL_{(K)} : ACM_{(K)}^{(R+1)}, INV_{(R)}^{(R)} >$$

$$= < (\lambda_0, \lambda_1, \dots, \lambda_{K-1}) : \left( w_0, w_0 + w_1, \dots, \sum_{i=0}^{K-1} w_i \right),$$

$$\left( x_{0,0}, x_{0,1}, \dots, x_{0,n_0-1} \right) + \cdots + \left( x_{K-1,0}, x_{K-1,1}, \dots, x_{K-1,n_{K-1}-1} \right) >;$$

$$\lambda_0 < \lambda_1 < \cdots < \lambda_{K-1}; \sum_{i=0}^{K-1} w_i = R \qquad \text{Equation (6)}$$

Here, $SVL_{(K)}$, $ACM_{(K)}^{(R+1)}$, and $INV_{(R)}^{(R)}$ are obtained in steps 3-1 to 3-3 below.

Step 3-1: $SVL_{(K)}$ is obtained by arranging $\lambda_0$, $\lambda_1$, ..., and $\lambda_{K-1}$, which are the values of the spectral decomposition in Equation (3), to form the SVL as a mapping A. It is the same as $SVL_{(K)}$ obtained by Equation (4).

Step 3-2: $ACM_{(K)}^{(R+1)}$ is

[Ex. 3]

$$ACM_{(K)}^{(R+1)} = \left( w_0, w_0 + w_1, \dots, \sum_{i=0}^{K-1} w_i \right)$$

, and is obtained by calculating the cumulative sum of the numbers of occurrences $w_i$ of the value $\lambda_i$ in Equation (3) to form the ACM as a mapping A. This step takes O(K) time.

Step 3-3: $INV_{(R)}^{(R)}$ is

[Ex. 4]

$$INV_{(R)}^{(R)} = \left(x_{0,0}, x_{0,1}, \ldots, x_{0,n_0-1}\right) + \cdots + \left(x_{K-1,0}, x_{K-1,1}, \ldots, x_{K-1,n_{K-1}-1}\right)$$

, and
[Ex. 5]

$$X_{0\,(w_0)}^{(R)}, X_{1\,(w_1)}^{(R)}, \ldots, X_{K-1\,(w_{K-1})}^{(R)}$$

of Equation (3) is concatenated to form the mapping A. Here, $x_{i,j}$ are the j-th record number from the top among the record numbers where $\lambda_i$ appears.
[Ex. 6]

$$X_{0\,(w_0)}^{(R)}, X_{1\,(w_1)}^{(R)}, \ldots, X_{K-1\,(w_{K-1})}^{(R)}$$

are the record numbers corresponding to $\lambda_0 < \lambda_1 < \ldots < \lambda_{K-1}$, and thus INV is an array of inverted record numbers.

For example, in the example illustrated in FIG. 4, the inverted structure is <(Alice, Bob, Cathy): (1, 3, 4), (1, 0, 3, 2) >.

The spectral decomposition is not a mapping A, and it is necessary to add $w_i$ to obtain the i-th element of the sort result column. The inverted structure derived from the spectral decomposition solves the first problem by a structure including three mappings A, and also solves the second problem because the i-th element of the sorted result column can be obtained by INV[i].

• Method of obtaining the spectral decomposition from the inverted structure

The spectral decomposition can be obtained from the inverted structure in D5A by the following method.
First, in the spectral decomposition of Equation (3), $\lambda_i$ can be obtained by $\lambda_i = SVL_{(K)}[i]$. Additionally, if $ACM[-1] \equiv 0$ is determined in advance,

[Ex. 7]

$$X_{i\,(w_i)}^{(R)}$$

can be obtained as follows.
[Ez. 8]

$$X_{i\,(w_i)}^{(R)} = \left(INV_{(R)}^{(R)}\left[ACM_{(K)}[i-1]\right], \ldots, INV_{(R)}^{(R)}\left[ACM_{(K)}[i]-1\right]\right)$$

From the above two, the i-th term of the spectral decomposition can be obtained as follows.
[Ex. 9]

$$\lambda_i \colon X_{i\,(w_i)}^{(R)} = SVL_{(K)}[i] \colon \left(INV_{(R)}^{(R)}\left[ACM_{(K)}[i-1]\right], \ldots, INV_{(R)}^{(R)}\left[ACM_{(K)}[i]-1\right]\right)$$

$$\text{Equation (7)}$$

For example, in the example illustrated in FIG. 4, the first term of the spectral decomposition can be obtained as follows.
[Ex. 10]

$$\lambda_1 : X^{(R)}_{1\,(w_1)} = SVL_{(K)}[1] : \left( INV^{(R)}_{(R)}\left[ACM_{(K)}[1-1]\right], \ldots, INV^{(R)}_{(R)}\left[ACM_{(K)}[1]-1\right]\right)$$

$$= Bob : \left( INV^{(R)}_{(R)}[ACM[0]], \ldots, INV^{(R)}_{(R)}[ACM[1]-1]\right)$$

$$= Bob : \left( INV^{(R)}_{(R)}[1], \ldots, INV^{(R)}_{(R)}[2]\right) = Bob : (0,3)$$

·Information obtained from the inverted structure

In addition to the information obtained from SVL (Information 1 to Information 4 above), Information 5 to Information 8 below can be obtained using the inverted structure.

Information 5: The number of occurrences of the i-th value from the smallest can be determined as follows.

$$\text{count} = ACM_{(K)}[i] - ACM_{(K)}[i-1] \quad \text{Equation (8)}$$

For example, in the example illustrated in FIG. 4, the number of occurrences of the first value from the smallest is $ACM_{(K)}[1] - ACM_{(K)}[0] = 3 - 1 = 2$.

Information 6: The i-th record number of the sorted result can be read as follows.

$$\text{The i-th record number of the sorted result} = INV[i] \quad \text{Equation (9)}$$

For example, in the example illustrated in FIG. 4, the first record number of the sorted result can be read as $INV[1] = 0$ (Bob).

Information 7: The record numbers with the i-th smallest value can be read as the following array.

$$(INV_{(R)}{}^{(R)}[ACM_{(K)}[i-1]], \ldots, INV_{(R)}{}^{(R)}[ACM_{(K)}[i]-1])$$

For example, in the example illustrated in FIG. 4, the record numbers with the first smallest value (Bob) can be read as $(INV[1], \ldots, INV[2]) = (0, 3)$.

Information 8: Record numbers with values v0 to v1 can be read below.

$(INV_{(R)}{}^{(R)}[ACM_{(K)}[i_0-1]], \ldots, INV_{(R)}{}^{(R)}[ACM_{(K)}[i_1]-1])$ where $i_0$ is the smallest $i_0$ that satisfies $v0 \leq SVL[i_0]$ and $i_1$ is the largest $i_1$ that satisfies $SVL[i_1] \leq i_1$. 
$\quad$ Equation (10)

For example, in the example illustrated in FIG. 4, record numbers with values Bob-Cathy are $i_0 = 1$ and $i_1 = 2$, and thus they can be read as $(INV[ACM[1-1]], \ldots, INV[ACM[2]-1]) = (INV[1], \ldots, INV[4-1]) = (0, 3, 2)$.

•An index that can be created with an inverted structure

As described above, the requirement for an index to be established is that the size W of the sort, search, and aggregation results is known, and if $i \in 0, 1, \ldots, W-1$ is specified, the i-th row of the sort, search, and aggregation results can be read in approximately $O(\log(R))$ steps or less. Next, we will verify that an index can be created with the inverted structure.

(Sorting)

The size of the sorting result is R. The i-th element of the sort result can be read by $O(1)$ using Equation (9). Therefore, the inverted structure satisfies the requirements for creating index for the sorting.

(Searching)

The case of Equation (10) will be described below. It is found that the size of the search result is $ACM_{(K)}[i_1] - ACM_{(K)}[i_0-1]$. For example, in the example illustrated in FIG. 4, the record numbers with the values Bob-Cathy are $i_0 = 1$, $i_1 = 2$, and therefore, $ACM_{(K)}[2] - ACM_{(K)}[1-1] = 4 - 1 = 3$.

The i-th element of the search result can be read as $O(1)$ by $(INV_{(R)}{}^{(R)}[ACM_{(K)}[i_0-1]], \ldots, INV_{(R)}{}^{(R)}[ACM_{(K)}[i_1]-1])[i]$. For example, in the example illustrated in FIG. 4, when searching for the values Bob-Cathy, as $i_0 = 1$ and $i_1 = 2$, it can be read as $(INV_{(R)}^{(R)}[ACM_{(K)}[1-1]], ..., INV_{(R)}^{(R)}[ACM_{(K)}[2]-1])[i] = (0, 3, 2)[i]$.

Therefore, the inverted structure satisfies the requirements for creating the index for searching.

(Aggregation)

It is found that the size of the aggregation result is K from Information 1 above. The i-th value of the aggregation result is given by Information 2 above and is obtained by O(1). The number of occurrences of the i-th value of the aggregation result is given by Equation (8) and is obtained by O(1). Therefore, the inverted structure satisfies the requirements for creating the index for aggregation.

For example, in the example illustrated in FIG. 4, when i = 1, the size of the aggregation result is 3, the first value of the aggregation result is Bob, and the number of occurrences of the first value of the aggregation result is ACM[1] - ACM [1-1] = 3 - 1 = 2.

As described above, it can be said that a D5A index that speeds up sorting, searching, and aggregation can be composed by using the inverted structure.

- The D5A index requires only a small amount of storage space to store the sort, search, and aggregation results.

(Sort Result)

The sort result is already stored in INV, and thus no new storage space is required.

(Search Result)

The case of Equation (10) will be described below. The search result is given as the array $(INV_{(R)}^{(R)}[ACM_{(K)}[i_0-1]], ..., INV_{(R)}^{(R)}[ACM_{(K)}[i_1]-1])$. Among them, INV and ACM have already been composed, and the storage area required to hold the search result is only storage areas of $i_0$ and $i_1$ regardless of the number of occurrences.

(Aggregation Result)

The i-th value of the aggregation result is given by Information 2 above, and no new storage area is required. The number of occurrences of the i-th value of the aggregation result is given by Equation (8), and no new storage area is required.

As described above, D5A functions to supply values to virtual tabular data and indexes to a virtual index. By using SVL and NNC obtained by the SN decomposition of the column, not only are values supplied, but also four types of information-Information 1 to 4 above-can be obtained. Additionally, it has been described that the D5A index can be composed using inverted structures (that is, the inverted structure can be used as the data structure for the index in sorting, searching, and aggregation). The D5A index not only speeds up sorting, searching, and aggregation, but also stores the sort, search, and aggregation results by using only a small amount of storage space.

<Virtual Tabular Data>

For example, when JOIN or UNION is performed in a relational database (RDB), the source tabular data is read, compared, a set of data to be written is created, its storage location is determined, and it is written to a newly allocated storage space.

This requires time and storage space. This is the problem in the first step when using tabular data in an archive. This problem becomes more serious as the newly generated tabular data becomes larger. This is because the generation takes a long time and requires a large storage space. Moreover, often, only a small portion of the generated tabular data is used.

The virtual tabular data is a mechanism for creating necessary portions as needed, and solves the above problem. That is, when a cell needs to be displayed in the virtual tabular data, it is displayed by referring to the cell of the source tabular data corresponding to that cell at that time. However, to do so, a mapping defining the correspondence between a cell of the virtual tabular data and a cell or cells of one or more source tabular data needs to be defined in advance. The mapping can be a mapping from the virtual tabular data to multiple source tabular data, or vice versa, it can be a mapping from multiple source tabular data to the virtual tabular data, both of which are essentially the same. However, in the former case, the mapping destination becomes a set of two pieces of information about which cell of which source tabular data, while in the latter case, the mapping destination becomes only one piece of information about which cell of the virtual tabular data. Therefore, the description will be provided using the latter below. Here, both require an inverse mapping. In the former case, the virtual index requires an inverse mapping, and in the latter case, the virtual tabular data requires it to refer to the source tabular data to obtain a value.

In the latter case, the mapping of which cell of each source tabular data corresponding to which cell of the virtual tabular data is called an assignment mapping.

However, the actual assignment mapping defines a mapping from each source column, which is a column of the source tabular data, to a virtual column, which is a column of the virtual tabular data. Each source column is divided into one or more intervals, and each cell in the interval is associated with a cell in the virtual column by a correspondence table or rule for each interval.

The correspondence for each interval is called an interval mapping. The assignment mapping is a combination of all interval mappings.

<<Procedure of Creating Assignment Mapping>>

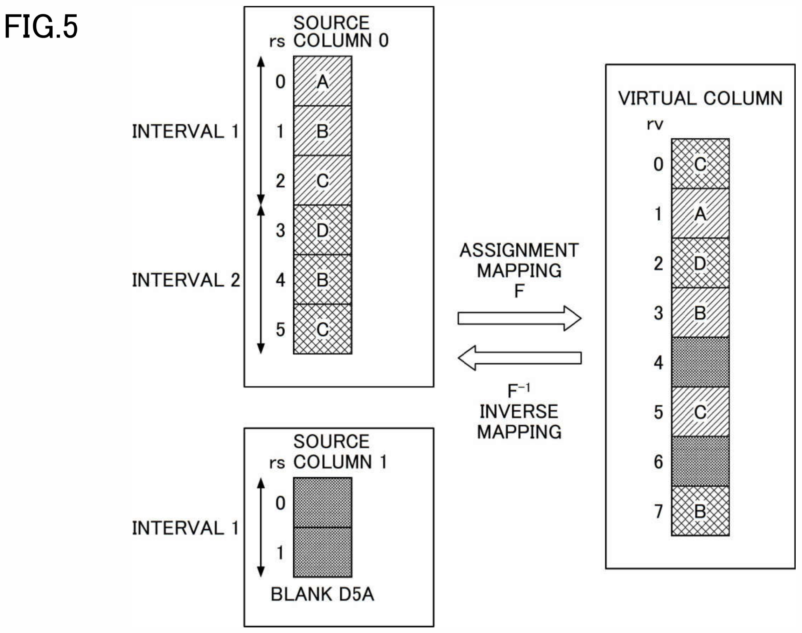

A procedure for creating the assignment mapping will be described with reference to FIG. 5. Hereinafter, rs refers to the record number on the source tabular data, and rv refers to the record number on the virtual tabular data.

A virtual column, which is a column on the virtual tabular data, is composed of assignment mappings from one or more source columns. In the example illustrated in FIG. 5, source columns 0 and 1 are assigned to the virtual column.

The blank D5A with source column 1 in the lower left of FIG. 5 is a D5A that is automatically created programmatically when the virtual column is created.

The blank D5A is used to supply a blank value to an unassigned cell on the virtual column so that the virtual column satisfies the bijection condition described later.

When the bijection condition is satisfied, the virtual tabular data is automatically equipped with a virtual index. In some cases, there are cases where it is not necessary to perform sorting, searching, or aggregation on the virtual tabular data. For example, this is the case where the entire result of UNION or JOIN as it is. In this case, of course, the virtual tabular data can be defined and used without considering the bijection condition.

Each source column is divided into one or more source intervals. In the example illustrated in FIG. 5, source column 0 is divided into intervals 1 and 2.

There are two types of mappings (that is, interval mappings) from the source interval to the virtual column.

The first is an enumerated mapping defined by M, which is the mapping A whose elements are natural numbers and do not overlap. The second is a linear functional mapping defined by a linear function. The former can define any assignment mapping, but it consumes a lot of storage space. The latter is a mapping that replaces M, which is the enumerated mapping with a linear functional mapping, and it consumes only a small amount of storage space and can define huge interval mappings, but it can only support regular assignments. When the interval mapping is defined for all source intervals, the assignment mapping is complete.

When any of the above interval mappings are defined, the inverse mapping and the existence condition of the inverse mapping is also determined. When displaying virtual tabular data, first, the source interval where the inverse mapping exists is specified from the record number of the virtual column, then the record number on the source column is specified by using the inverse mapping of the interval mapping, and a value is obtained from the record number and is displayed.

In the following, the interval mappings by the enumerated mapping and the linear functional mapping will be described, and then a method of displaying the virtual tabular data will be described with reference to FIG. 5.

<<Interval Mapping by Enumerated Mapping and its Inverse Mapping>>

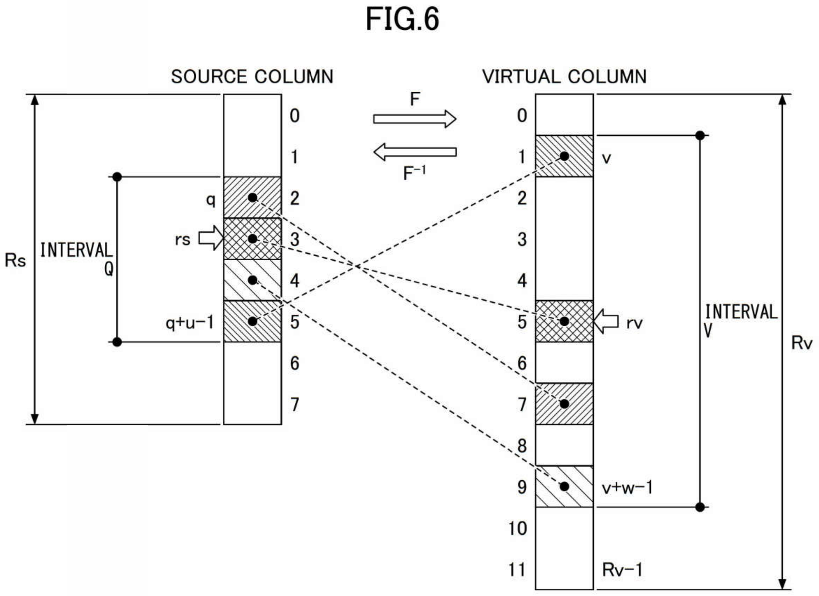

FIG. 6 illustrates an example of assignment by the enumerated mapping. In FIG. 6, Rs represents the size of the source column, rs represents the record number of the source column, Rv represents the size of the virtual column, rv represents the record number of the virtual column, Q represents an interval on the source column, q represents the start position of the interval Q, u represents the length of the interval Q, V represents an interval on the virtual column corresponding to the interval Q, v represents the start position of the interval V, and w represents the length of the interval V.

In this case, the interval mapping F: Q→V by the enumerated mapping is expressed as follows.

$$rv = M_{(u)}{}^{(Rv)}[rs\text{-}q] \quad \text{Equation (11)}$$

Additionally, the inverse mapping $F^{-1}$: V→Q is expressed as follows.

$$M_{(u)}{}^{(Rv)} = L_{(u)}{}^{(Rv)} \cdot P_{(u)}{}^{(u)};$$

$L_{(u)}{}^{(Rv)}[j] = rv;$

$$rs = P^{-1}{}_{(u)}{}^{(u)}[j] + q \quad \text{Equation (12)}$$

·Enumerated mapping

First, Equation (11) defining the interval mapping by the enumerated mapping will be described. In FIG. 6, the numbers written next to the source column and virtual column are record numbers. M can be defined by writing out corresponding record numbers on the virtual column sequentially from the beginning of the source interval. In the example illustrated in FIG. 6, it is (7, 5, 9, 1). Here, the starting position q of the source interval Q is 2.

The source interval (interval Q) starts at rs = 2 and ends at rs = 5. Applying each rs to Equation (11) gives the following results.

When

$$rs = 2, \ rv = (7, 5, 9, 1) \ 2\text{-}2] = 7$$

When

$$rs = 3, \ rv = (7, 5, 9, 1)[3\text{-}2] = 5$$

When

$$rs = 4, \ rv = (7, 5, 9, 1)[4\text{-}2] = 9$$

When

$$rs = 5, \ rv = (7, 5, 9, 1)[5\text{-}2] = 1$$

·Inverse Mapping of Enumerated Mapping

Next, Equation (12), which defines the inverse mapping of the enumerated mapping, will be described.

M is the mapping A whose elements are natural numbers without overlap, and can be decomposed into LP form. The top part of Equation (12) indicates the LP decomposition. By the LP decomposition, L = (1, 5, 7, 9) and P = (2, 1, 3, 0) are obtained. L is a unique ascending array, and whether an element exists and the position where it appears, if it exists, can be determined by a bisection search. P is a symmetric array and has the inverse $P^{-1}$ = (3, 1, 0, 2).

The middle part of Equation (12) indicates a method of finding the position where rv appears in L, and j is the position where it appears. Here, if j is not found, it means that rv does not accept the mapping from source interval Q, and there is no inverse mapping.

The lower part of Equation (12) indicates that rs can be found using $P^{-1}$ = (3, 1, 0, 2), q = 2, and j described above.

Based on the above, rs for rv = 1, 5, 7, 9 will be calculated.

When

$$rv = 1, \ \text{from } (1, 5, 7, 9)[j] = 1, \ j = 0; \ rs = (3, 1, 0, 2)[j] + 2 = 5$$

When

$$rv = 5, \ \text{from } (1, 5, 7, 9)[j] = 5, \ j = 1; \ rs = (3, 1, 0, 2)[j] + 2 = 3$$

When

$$rv = 7, \ \text{from } (1, 5, 7, 9)[j] = 7, \ j = 2; \ rs = (3, 1, 0, 2)[j] + 2 = 2$$

When

$$rv = 9, \ \text{from } (1, 5, 7, 9)[j] = 9, \ j = 3; \ rs = (3, 1, 0, 2)[j] + 2 = 4$$

<<Interval Mapping by Linear Functional Mapping and Its Inverse Mapping>>

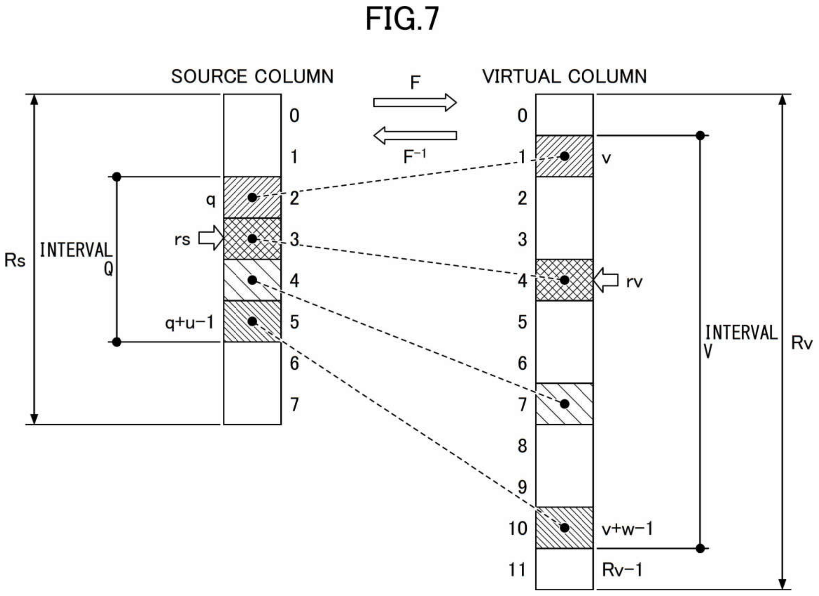

FIG. 7 illustrates an example of assignment by the linear functional mapping. In FIG. 7, Rs represents the size of the source column, rs represents the record number of the source column, Rv represents the size of the virtual column, rv represents the record number of the virtual column, Q represents an interval on the source column, q represents the start position of the interval Q, u represents the length of the interval Q, V represents an interval on the virtual column corresponding to the interval Q, v represents the start position of the interval V, and w represents the length of the interval V.

In this case, the interval mapping F: Q→V by the linear functional mapping is expressed as follows.

$$rv = a \times rs + b; \text{ a and b are integers, } a \neq 0 \quad \text{Equation (13)}$$

The inverse mapping $F^{-1}$: V→Q is expressed as follows.

$$rs = (rv-b) / a \quad \text{Equation (14)}$$

Here, if $v \leq rv < v + w$ is not satisfied or rs is not an integer, rv is not within the range of F.

•Linear Functional Mapping

First, Equation (13), which defines the linear functional mapping, will be described. In FIG. 7, numbers written next to the source column and the virtual column are record numbers. a denotes the interval on the virtual column, and in the example illustrated in FIG. 7, a = 3 and b = -5.

The source interval (interval Q) starts at rs = 2 and ends at rs = 5. Applying each rs to Equation (13) gives the following results.

When

$$rs = 2, rv = 3 \times rs - 5 = 1$$

When

$$rs = 3, rv = 3 \times rs - 5 = 4$$

When

$$rs = 4, rv = 3 \times rs - 5 = 7$$

When

$$rs = 5, rv = 3 \times rs - 5 = 10$$

·Inverse Mapping of the Linear Functional Mapping

Next, Equation (14), which defines the inverse of the linear functional mapping, will be described. As described above, a = 3 and b = -5.

First, it is necessary to confirm that $v \leq rv < v + w$ is satisfied. Because v = 1 and w = 10, $1 \leq rv < 1 + 10$. If this condition is satisfied, the upper part of Equation (14) is used to obtain rs. In this case, if rs is not an integer, as illustrated in the lower part of Equation (14), it means that rv does not accept a mapping from source interval Q, and there is no inverse mapping.

When

$$rv = 1, rs = (1 - (-5)) / 3 = 2$$

When

$$rv = 4, rs = (4 - (-5)) / 3 = 3$$

When

$$rv = 7, rs = (7 - (-5)) / 3 = 4$$

When

$$rv = 10, rs = (10 - (-5)) / 3 = 5$$

<<Displaying Virtual Tabular Data>>

Referring again to FIG. 5, a method of displaying the virtual tabular data will be described. The source interval 1 of the source column 0 is subjected to the interval mapping using the linear functional mapping, the source interval 2 of the source column 0 is subjected to the interval mapping using the enumerated mapping, and the source interval 1 of the source column 1 is subjected to the interval mapping using the linear functional mapping. The definitions of the interval mappings are as follows.

The interval mapping in the source interval 1 of the source column 0 is defined by Equation (13) as F: $rv = rs \times 2 + 1$.

The interval mapping in the source interval 2 of the source column 0 is defined by Equation (11) as F: $rv = (2, 7, 0)$ [rs-3]. It can be confirmed that this is correct by substituting rs = 3, 4, and 5 as follows.

When

$$rs = 3, rv = (2, 7, 0)[3-3] = 2$$

When

$$rs = 4, rv = (2, 7, 0)[4-3] = 7$$

When

$$rs = 5, rv = (2, 7, 0)[5-3] = 0$$

The interval mapping in the source interval 1 of the source column 1 of the blank D5A is defined by Equation (13) as F: $rv = rs \times 2 + 4$.

Once each interval mapping F is defined, their inverse mappings $F^{-1}$ are automatically determined as follows.

The inverse mapping in the source interval 1 of the source column 0 is $F^{-1}$: $rs = (rv - 1) / 2$ by Equation (14).

The inverse mapping in the source interval 2 of the source column 0 is, by Equation (12), $F^{-1}$: $rs = (2, 0, 1)[j] + 3$; $rv = (0, 2, 7)[j]$. First, when rv = 0, the bisection search is performed for (0, 2, 7) to find the storage position j = 0 for rv, and rs = (2, 0, 1)[0] + 3 = 5. Similarly, when rv = 2, the bisection search is performed for (0, 2, 7) to find the storage position j = 1 for rv, and rs = (2, 0, 1)[1] + 3 = 3. Similarly, when rv = 7, the bisection search is performed for (0, 2, 7) to find the storage position j = 2 for rv, and rs = (2, 0, 1)[2] + 3 = 4.

The inverse mapping in the source interval 1 of the source column 1 of the blank D5A is $F^{-1}$: $rs = (rv - 4) / 2$ by Equation (13).

In summary, when rv = 0, 1, 2, 3, 5, 7, rs = 5, 0, 3, 1, 2, 4 in the source column 0 is obtained, and when rv = 4, 6, rs = 0, 1 in source column 1 is obtained.

<<Method of Configuring Virtual Tabular Data>>

To realize the functions described above, the virtual tabular data includes the following information:

1. The number of records
2. The name and data type of the virtual column
3. The URL or path of one or more source tabular data
4. The definition of the source column and the source interval in the source tabular data described above
5. The definition of the interval mapping and its inverse mapping for each source interval All items except 5 above do not require a large storage area. Additionally, 5 above requires a large storage area only when the source interval is large and is mapped by an enumerated mapping. Therefore, the virtual tabular data can be constructed compactly in many cases.

<<Collision Detection of Assignments from Different Intervals>>

Here, a method for checking whether the assignment destinations mapped by the assignment mappings collide will be described. In the following, two assignment mappings are $F_0$: $Q_0 \rightarrow V_0$ and $F_1$: $Q_1 \rightarrow V_1$.

First, as an obvious case, if any of the following conditions (Condition 1-1) to (Condition 1-3) are satisfied, the two assignment mappings $F_0$ and $F_1$ do not collide.

(Condition 1-1) A case where $V_0$ and $V_1$ are not on the same virtual column
(Condition 1-2) A case where $v_0 + w_0 - 1 < v_1$
(Condition 1-3) A case where $v_1 + w_1 - 1 < v_0$

Here, $v_0$ is the start position of $V_0$, $w_0$ is the length of $V_0$, $v_1$ is the start position of $V_1$, and $w_1$ is the length of $V_1$.

If the above obvious case does not apply, the following (Case 1) to (Case 3) can be used to check whether two assignment mappings $F_0$ and $F_1$ collide.

(Case 1) A case where both $F_0$ and $F_1$ are enumerated mappings

$L_0 = (v_0, ..., v_0+w_0-1)$ and $L_1 = (v_1, ..., v_1+w_1-1)$, and the common range of $L_0$ and $L_1$ is newly defined as $L_0$ and $L_1$. Here, $w_0$ is the length of $V_0$ and $w_1$ is the length of $V_1$.

Then, for i = 0 and j = 0, the following steps (step 4-1) to (step 4-3) are performed.

Step 4-1: If $L_0[i] = L_1[j]$, the process ends with a "collision".

Step 4-2: If $L_0[i] < L_1[j]$, the process returns to step 4-1 as i←i+1. However, if i exceeds the maximum value of the index representing the element of $L_0$ as a result of i←i+1, the process ends with "no collision".

Step 4-3: If $L_0[i] > L_1[j]$, the process returns to step 4-1 with j←j+1. However, if j exceeds the maximum value of the index representing the element of $L_1$ as a result of j←j+1, the process ends with "no collision".

(Case 2) A case where both $F_0$ and $F_1$ are linear functional mappings

The common part of $V_0$ and $V_1$ is selected, and $F_0$ and $F_1$ are respectively described by the following equations whose range is the common part. At this time, $a_0$ and $a_1$ are adjusted so that they become positive.

$$y_0 = a_0 \times x_0 + b_0;\ x_0 = 0,1,2, ...,N_0\text{-}1$$

$$y_1 = a_1 \times x_1 + b_1;\ x_1 = 0,1,2, ...,N_1\text{-}1$$

Here, $a_0$ and $a_1$ are integers greater than or equal to 1, and $b_0$ and $b_1$ are integers.

Then, assuming that $x_0 = 0$ and $x_1 = 0$, the following steps 5-1 to 5-3 are performed.

Step 5-1: If $y_0 = y_1$, the process ends with "collision".

Step 5-2: If $y_0 < y_1$, the process returns to step 5-1 as $x_0 \leftarrow x_0 + \text{MaxInt}(1, (y_1 - y_0)\text{ div }a_0)$. However, if $x_0 > \text{MinInt}(N_0\text{-}1, \text{LCM}(a_0, a_1)\text{ div }a_0)$ as a result of $x_0 \leftarrow x_0 + \text{MaxInt}(1, (y_1 - y_0)\text{ div }a_0)$, the process ends with "no collision".

Step 5-3: If $y_0 > y_1$, the process returns to step 5-1 as $x_1 \leftarrow x_1 + \text{MaxInt}(1, (y_0 - y_1)\text{ div }a_1)$. Here, if $x_1 > \text{MinInt}(N_1\text{-}1, \text{LCM}(a_0, a_1)\text{ div }a_1)$ as a result of $x_1 \leftarrow x_1 + \text{MaxInt}(1, (y_0 - y_1)\text{ div }a_1)$, the process ends with "no collision".

Here, MaxInt represents a function that selects the maximum integer, MinInt represents a function that selects the minimum integer, div represents an integer division (with remainder being truncated), and LCM represents a function that returns the least common multiple.

(Case 3) A case where one of $F_0$ or $F_1$ is an enumerated mapping and the other is a linear functional mapping

Hereinafter, it is assumed that $F_0$ is a linear functional mapping and $F_1$ is an enumerated mapping. The common part of $V_0$ and $V_1$ is selected, and $F_0$ and $F_1$ are respectively rewritten by the following equations whose range is the common part. At this time, $a_0$ is adjusted so that it becomes positive.

$$y_0(n) = a_0 \times n + b_0;\ x_0 = 0,1,2, ...,N\text{-}1$$

$$y_1(m) = (v_1, ..., v_1+w_1\text{-}1)[m]$$

Here, $a_0 > 0$. Additionally, $(v_1, ..., v_1+w_1-1)$ is an ascending array of size M.

Then, assuming n = 0 and m = 0, the following steps 6-1 to 6-3 are performed.

Step 6-1: If $y_0(n) = y_1(m)$, the process ends with "collision".

Step 6-2: If $y_0(n) > y_1(m)$, the process returns to step 6-1 as $m \leftarrow m+1$. However, if m = M as a result of $m \leftarrow m+1$, the process ends with "collision".

Step 6-3: If $y_0(n) < yi(m)$, the process returns to step 6-1 as $n \leftarrow (y_1(m) - y_0(n))$ div $a_0$. However, if $n \geq N$ as a result of $n \leftarrow (y_1(m)-y_0(n))$ div $a_0$, the process ends with "no collision".

<Virtual Index>

The method of creating the virtual tabular data whose values are inherited directly or indirectly from D5A has been described. In the following, the reason why a virtual inverted structure is automatically established on the virtual tabular data by directly or indirectly inheriting the inverted structure on D5A will be described. When the virtual inverted structure is established, a virtual index that uses it as a data structure for the index is also automatically established. The virtual index only uses a virtual inverted structure instead of an inverted structure, and uses the same algorithms as a D5A index, and therefore has the same functions and characteristics as the D5A index. That is, sorting, searching, and aggregation of a column can be accelerated, and even large sort, search, and aggregation results can be stored with only a small amount of storage space.

Similar to the inverted structure, the virtual inverted structure is a structure including a virtual SVL, a virtual ACM, and a virtual INV. Here, the virtual SVL, virtual ACM, and virtual INV are virtual arrays. The virtual array is a mechanism having substantially the same function as an array, in which the size W is known in advance and the i-th element can be retrieved within $O(\log(R))$ or less when $i \in 0, 1, ..., W-1$ is specified, without retaining values as in the virtual tabular data. The virtual SVL, virtual ACM, and virtual INV are automatically established if the assignment mapping that defines the virtual tabular data satisfies the following bijection condition.

•Bijection condition

1. (Establishment of the mapping) All cells in the source column are mapped to cells in the virtual column.
2. (Injection) No cells in the virtual column are mapped from two or more cells in the source column.
3. (Surjection) All virtual column cells are mapped from the cells in the source column.
4. (Source column is constructed by bijection) If the source column is D5A, the source column can be regarded as constructed by bijection. If the source column is a virtual column, the source column is constructed by bijection when the source column satisfies the above 1-3.

In the following, first, it will be described that the virtual inverted structure can be constructed from multiple inverted structures, and it will be confirmed that sorting, searching, and aggregation can be performed at high speed by using a virtual index that uses the virtual inverted structure, and that sort, search, and aggregation results can be retained with only a small additional storage area. Next, it will be confirmed that a virtual inverted structure can be further constructed hierarchically using the virtual inverted structure and an inverted structure, and that sorting, searching, and aggregation can be performed at high speed even with a virtual index that uses it, and that sort, search, and aggregation results can be retained with only a small amount of additional storage. Finally, it will be confirmed that the operation of a virtual inverted structure hierarchically constructed can be easily understood by means of spectral decomposition.

<<Method of Constructing Virtual Inverted structure>>

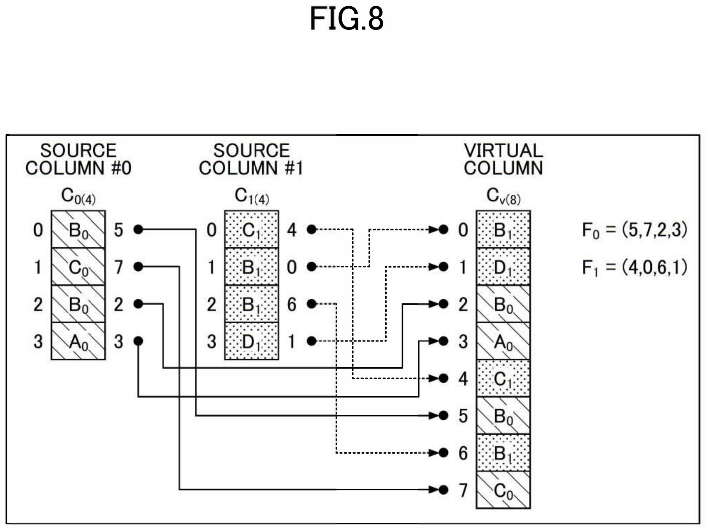

As an example, the virtual column $C_{V(8)}$ defined from the source column #0: $C_{0(4)}$ and the source column #1: $C_{1(4)}$ is illustrated in FIG. 8. The elements of $C_{0(4)}$ and $C_{1(4)}$ are indicated by the number of the source column as the subscript, such as $A_0, B_0, C_0, B_1, C_1$, and $D_1$, but the values are $B_0 = B_1$ and $C_0 = C_1$. At this time, the assignment destinations from the source column #0 are rows 5, 7, 2, and 3 of the virtual column, so the allocation mapping $F_0 = (5, 7, 2, 3)$. Similarly, the assignment destinations from the source column #1 are rows 4, 0, 6, and 1 of the virtual column, so the assignment mapping $F_1 = (4, 0, 6, 1)$.

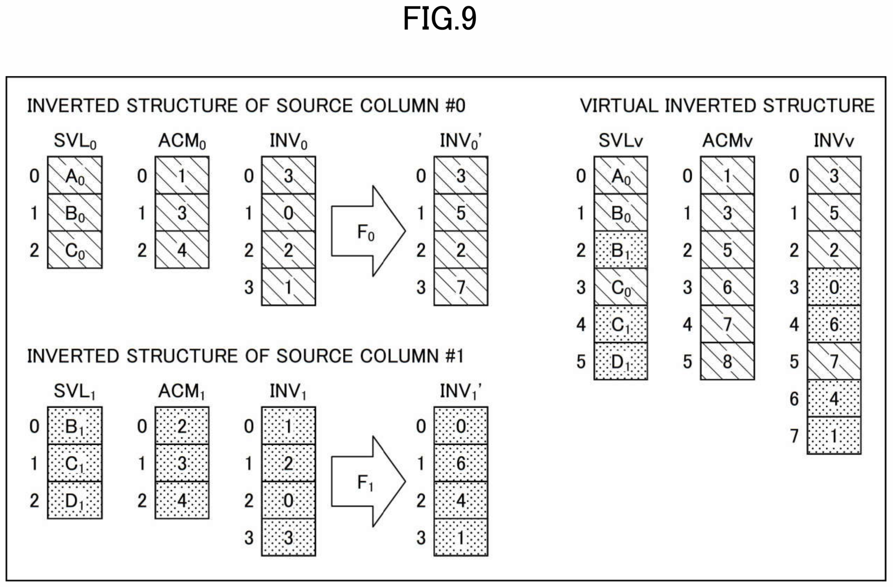

The inverted structure of the source column #0, the inverted structure of the source column #1, and the virtual inverted structure are illustrated in FIG. 9. Here, SVL, ACM, and INV in the inverted structure of the source column #0 are denoted as $SVL_0$, $ACM_0$, and $INV_0$, respectively, and SVL, ACM, and INV in the inverted structure of the source column #1 are denoted as $SVL_1$, $ACM_1$, and $INV_1$, respectively. SVL, ACM, and INV in the virtual inverted structure of the virtual column are denoted as $SVL_v$, $ACM_v$, and $INV_v$, respectively.

Both $INV_0$ and $INV_1$ are arrays in which inverted record numbers are stored, and the record numbers on the source column are mapped to the record numbers on the virtual column by the assignment mapping, and thus when reading $INV_0$ and $INV_1$, they need to be replaced with $INV_0'$ and $INV_1'$, respectively. $INV_0'$ and $INV_1'$ can be calculated by Equation (15) below.

$$INV_0' = F_0 \cdot INV_0 = (5, 7, 2, 3) \cdot (3, 0, 2, 1) = (3, 5, 2, 7) \quad \text{Equation (15)-1}$$

$$INV_1' = F_1 \cdot INV_1 = (4, 0, 6, 1) \cdot (1, 2, 0, 3) = (0, 6, 4, 1) \quad \text{Equation (15)-2}$$

Hereinafter, using FIG. 9 as an example, the method for constructing the virtual inverted structure will be described in order of the virtual array $SVL_V$, $ACM_V$, and $INV_V$.

•Method of Constructing the Virtual Array $SVL_V$

First, a method of obtaining the size of $SVL_V$ will be described. It is assumed in advance that the relative magnitude of the values B and C that appear in common in $SVL_0$ and $SVL_1$ is determined by taking into account the order of the source columns. That is, it is assumed that $B_0$ in $SVL_0$ is less than $B_1$ in $SVL_1$. Then, there will be no value whose relative magnitude cannot be determined between SVLs, and the size of $SVL_V$ will be 6, which is the sum of the size of $SVL_0 = 3$ and the size of $SVL_1 = 3$.

Next, a method of obtaining $SVL_V[i]$, the i-th element of $SVL_V$, will be described. An appropriate value v is selected from $SVL_0$ or $SVL_1$. However, v follows the above rules for determining the relative magnitude by taking into account the order of the source columns. Next, the sum j of the numbers of values less than v in $SVL_0$ and $SVL_1$ is obtained. If j < i, v' greater than v is selected and the above step is performed again. If j > i, substantially the same processing is performed (however, v' less than v is selected). If j = i, then v is $SVL_V[i]$.

The above-described method of obtaining $SVL_V[i]$ can be performed in about $O(\log(K))$. Then, the size of $SVL_V$ is known and its i-th element can be retrieved in $O(\log(R))$ or less, and thus it can be assumed that the virtual array $SVL_V$ can be considered to exist.

An example when i = 0 will be described. First, $B_1$ of $SVL_1$ is selected as v. There are two values less than v in $SVL_0$ and zero values in $SVL_1$. Therefore, j=2+0=2, which is greater than i=0. Next, $A_0$ in $SVL_0$ is selected as v. Then, j = 0 and j = i. Therefore, $SVL_V[0] = A_0$.

An example when i = 4 will be described. First, $B_0$ of $SVL_0$ is selected as v. There is one value less than v in $SVL_0$ and zero values in $SVL_1$. Therefore, j = 1 + 0 = 1, which is less than i = 4. Next, $C_1$ of $SVL_1$ is selected as v. Then j = 3 + 1 = 4 and j = i. Therefore, $SVL_V[4] = C_1$.

As described above, the virtual array $SVL_V = (A_0, B_0, B_1, C_0, C_1, D_1)$ can be created.

•Method of Constructing the Virtual Array $ACM_V$

First, the size of $ACM_V$ is obtained as the size of $SVL_V$.

Next, a method of obtaining the i-th element $ACM_V[i]$ of $ACM_V$ will be described. First, v is obtained where v = $SVL_V[i]$ by the method described in "Method of constructing the virtual array $SVL_V$". Next, the largest $i_0$ satisfying $SVL_0[i_0] \leq$ v is obtained. If $i_0$ is not found, it is assumed as $i_0 = -1$. Note that ACM[-1] = 0.

Similarly, the largest $i_1$ satisfying $SVL_1[i_1] \leq$ v is obtained. Then, $ACM_V[i]$ is obtained as $ACM_V[i] = ACM_0[i_0] + ACM_1[i_1]$.

The above method of obtaining $ACM_V[i]$ can be performed in about $O(\log(K))$. Then, the size of $ACM_V$ becomes known and its i-th element can be retrieved in $O(\log(R))$ or less, and thus it can be considered that the virtual array $ACM_V$ exists.

An example when i=3 will be described. First, $B_1$ of $SVL_1$ is selected as v. There are two values less than v in $SVL_0$ and zero values in $SVL_1$. Therefore, j = 2, which is less than i = 3. Next, $C_0$ of $SVL_0$ is selected as v. Then, j = 2 + 1 = 3, which indicates that $SVL_V[3] = C_0$.

Next, the largest $i_0$ satisfying $SVL_0[i_0] \leq$ v is obtained, and thus $i_0 = 2$ is obtained. Next, the largest $i_1$ satisfying $SVL_1[i_1] \leqq$ v is obtained, and thus $i_1 = 0$ is obtained. Therefore, $ACM_V[3]$ is obtained as $ACM_V[3] = ACM_0[2] + ACM_1[0] = 4 + 2 = 6$.

As described above, the virtual array $ACM_V = (1, 3, 5, 6, 7, 8)$ can be created.

•Method of Constructing the virtual Array $INV_V$

First, the size of $INV_V$ is known as R. Here, R is the sum of the sizes of the source columns.

Next, to obtain $INV_V[i]$, a method for obtaining j that satisfies $ACM_V[j-1] \leq i \leq (ACM_V[j]-1)$. j is the interval number on

$INV_V$ defined by $ACM_V$.

Let $K_V$ be the size of $ACM_V$. Here, $K_V$ is the sum of the sizes of $ACM_0$ and $ACM_1$. First, an appropriate j is selected from among 0, 1, ..., and $K_V$-1, and the interval $ACM_V[j-1]$ to $ACM_V[j]$-1 is obtained by the method described in "Method of Constructing the Virtual Array $ACM_V$".

If $i < ACM_V[j-1]$, j is changed to a smaller value and the interval is reselected. If $i > ACM_V[j]$-1, j is changed to a larger value and the interval is reselected. This is repeated to determine j. When j is determined, offset = $i - ACM_V[j-1]$ is obtained.

Next, $v = SVL_V[j]$ is obtained. Then, the value v and its source column are obtained. Using the value v, k is obtained where SVL[k] =v in SVL on the source column. With this, $INV_V[i]$ is obtained as $INV_V[i]$ = INV'[ACM[k-1] + offset]. Here, INV' and ACM are INV' and ACM on the source column.

The above method of obtaining $INV_V[i]$ can be performed in about O(log(K)). Then, the size of $INV_V$ is known and its i-th element can be retrieved efficiently, and thus it can be considered that the virtual array $INV_V$ exists.

An example when i = 4 will be described. First, j = 3 is selected. The lower limit of the interval is $ACM_V[j-1]$ = $ACM_V[2]$ = 5, and the upper limit of the interval is $ACM_V[j]$ - 1 = $ACM_V[3]$ - 1 = 5, indicating that the selected interval is too large. Thus, j = 2 is reselected. The lower limit of the interval is $ACM_V[j-1]$ = $ACM_V[1]$ = 3, and the upper limit of the interval is $ACM_V[j]$ - 1 = $ACM_V[2]$ - 1 = 4. Therefore, it is found that i = 4 belongs to the interval j = 2. offset = $i - ACM_V[j-1]$ = 4 - $ACM_V[1]$ = 1. Next, it is found that $v = SVL_V[j] = SVL_V[2] = B_1$. Next, it is found that k is 0 for SVL[k] = $B_1$ on the source column #1. With this, $INV_V[4]$ = INV'[ACM[k-1] + offset] = INV'[1] = 6 is obtained.

From the above, the virtual array $INV_V$= (3, 5, 2, 0, 6, 7, 4, 1) can be created.

•Sorting with Virtual Index

Sorting is performed with a virtual index using virtual inverted structure. NNC is not described in FIGS. 8 and 9, and thus $C_{v(8)}$ in FIG. 8 is used instead. The sort result is as follows.

$$C_{v(8)} \cdot INV_V = (B_1, D_1, B_0, A_0, C_1, B_0, B_1, C_0) \cdot (3, 5, 2, 0, 6, 7, 4, 1) = (A_0, B_0, B_0, B_1, B_1, C_0, C_1, D_1)$$

From the above result, it is found that sorting is performed. In addition, it is found that in the sort result, "B" and "C" in $C_{0(4)}$ come before those in $C_{1(4)}$ even if they are the same "B" and "C". This is because the rule that the value in the lower column number has a smaller value when the values are the same, is reflected. Additionally, it is the same as the D5A index that no new storage area is required to hold the sort result.

•Searching with Virtual Index

Searching is performed with a virtual index using the virtual inverted structure. NNC is not described in FIGS. 8 and 9, and thus $C_{v(8)}$ in FIG. 8 is used instead. The searching is performed under conditions B to C.

$i_0$ = 1 and $i_1$ = 4 in Equation (10), and thus $(INV_{(R)}^{(R)}[ACM_{(K)}[i_0-1]], ..., INV_{(R)}^{(R)}[ACM_{(K)}[i_1]-1])$ = (5, 2, 0, 6, 7, 4). Therefore, the search result is as follows.

$$C_{v(8)} \cdot (5, 2, 0, 6, 7, 4) = (B_1, D_1, B_0, A_0, C_1, B_0, B_1, C_0) \cdot (5, 2, 0, 6, 7, 4) = (B_0, B_0, B_1, B_1, C_0, C_1)$$

Additionally, it requires only a small amount of storage space to hold the search result, which is the same as the D5A index, because it requires only to hold $i_0$ and $i_1$.

•Aggregation Using Virtual Index

Aggregation is performed using a virtual index using the virtual inverted structure. The i-th value "value" of the aggregation result is given by Information 2 above, and the number of occurrences "count" of the i-th value of the aggregation result is given by Equation (8). When aggregation is performed according to this, it is as indicated in Table 1 below.

[Table 1]

| i | value | count | Remarks |
|---|---|---|---|
| 0 | $A_0$ | 1 | From source column #0 |
| 1 | $B_0$ | 2 | From source column #0 |

(continued)

| i | value | count | Remarks |
|---|---|---|---|
| 2 | $B_1$ | 2 | From source column #1 |
| 3 | $C_0$ | 1 | From source column #0 |
| 4 | $C_1$ | 1 | From source column #1 |
| 5 | $D_1$ | 1 | From source column #1 |

Here, even if the same value is provided by different D5A, the aggregation result is obtained separately. Therefore, a user who prefers it keeps it as it is, and a user who does not prefer it needs to sum up the number of occurrences for the same value. The sum does not exceed the number of D5As at the maximum, the processing time required for the summation is not large. Additionally, no additional storage is required to hold the aggregation result, which is the same as the D5A index.

As described above, it is found that the virtual SVL, virtual ACM, and virtual INV exist. Therefore, it can be said that the virtual inverted structure exists. The inverted structure is a data structure for the D5A index, and for substantially the same reason, it can be said that the virtual inverted structure is a data structure for the virtual index.

Additionally, the virtual inverted structure includes a reference to the inverted structure of the source column. However, when the source column is a virtual column, the inverted structure is a virtual inverted structure. In this case, the virtual inverted structure is constructed hierarchically.

<<Virtual Index of Hierarchically Created Virtual Tabular Data>>

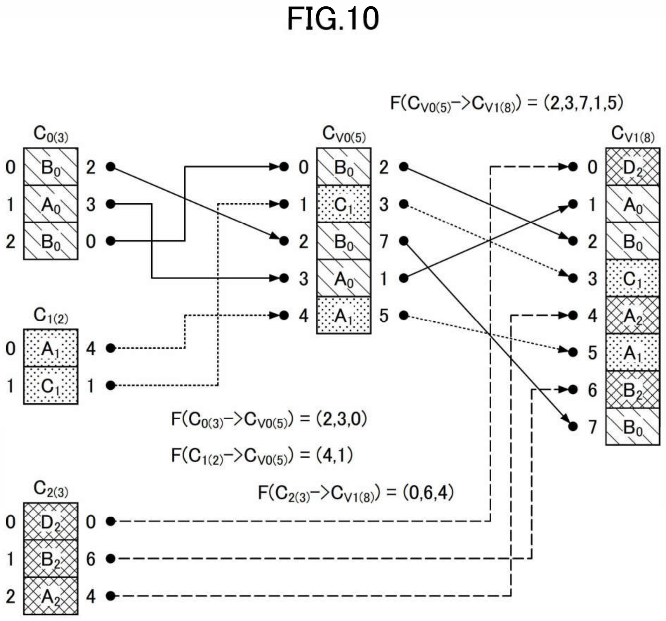

It has been described that the virtual inverted structure can be constructed hierarchically. An example is used to verify this. FIG. 10 indicates an example in which virtual tabular data $C_{V0(5)}$ is created using D5A files $C_{0(3)}$ and $C_{1(2)}$, and virtual tabular data $C_{V1(8)}$ is further created using the virtual tabular data $C_{V0(5)}$ and a D5A file $C_{2(3)}$. The definition of an assignment mapping is indicated below.

$$F(C_{0(3)} \rightarrow C_{V0(5)}) = (2, 3, 0)$$

$$F(C_{1(2)} \rightarrow C_{V0(5)}) = (4, 1)$$

$$F(C_{V0(5)} \rightarrow C_{V1(8)}) = (2, 3, 7, 1, 5)$$

$$F(C_{2(3)} \rightarrow C_{V1(8)}) = (0, 6, 4)$$

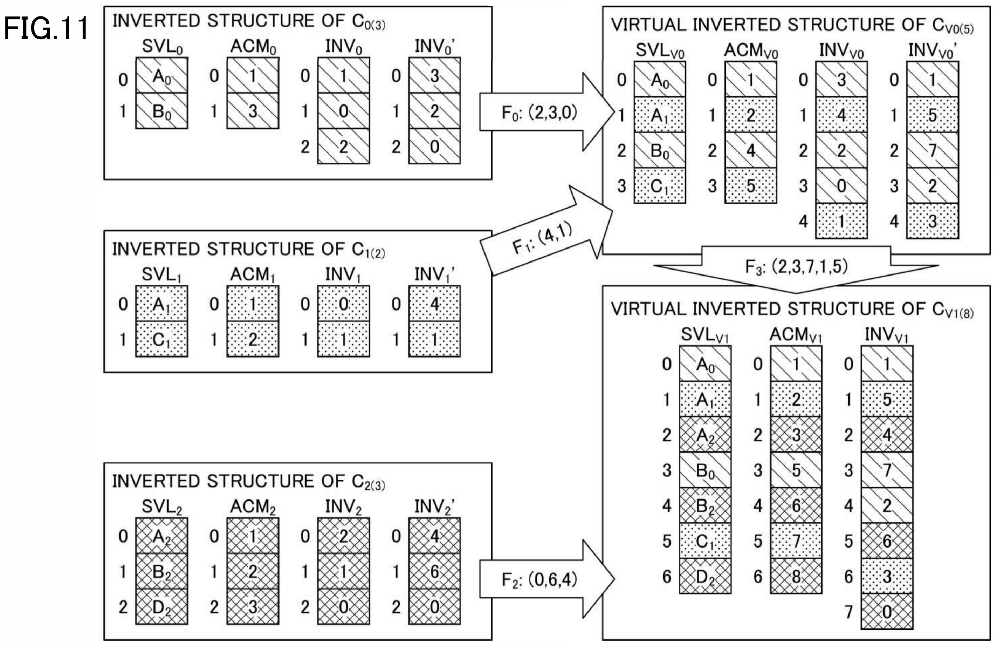

In this case, FIG. 11 indicates how the inverted structure indicated of FIG. 10 is created. The inverted structures or virtual inverted structures of $C_{0(3)}$, $C_{1(2)}$, $C_{V0(5)}$, and $C_{2(3)}$ is as indicated in the drawing. In substantially the same way as in Equation (15), each INV is read as INV' as follows.

$$INV_0' = F(C_{0(3)} \rightarrow C_{V0(5)}) \cdot INV_0 = (2, 3, 0) \cdot (1, 0, 2) = (3, 2, 0)$$

$$INV_1' = F(C_{1(2)} \rightarrow C_{V0(5)}) \cdot INV_1 = (4, 1) \cdot (0, 1) = (4, 1)$$

$$INV_{V0}' = F(C_{V0(5)} \rightarrow C_{V1(8)}) \cdot INV_{V0} = (2, 3, 7, 1, 5) \cdot (3, 4, 2, 0, 1) = (1, 5, 7, 2, 3)$$

$$INV_2' = F(C_{2(3)} \rightarrow C_{V1(8)}) \cdot INV_2 = (0, 6, 4) \cdot (2, 1, 0) = (4, 6, 0)$$

Using SVL, ACM, and INV' created as above, the virtual inverted structures of $C_{V0(5)}$ and $C_{V1(8)}$ can be constructed by the procedure described above.

Here, on the hierarchical created virtual tabular data, sorting, searching, and aggregation are performed using the virtual index.

**EP 4 657 274 A1**

•Sorting Using Virtual Index of Hierarchically Created Virtual Tabular Data

Sorting is performed using a virtual index using a hierarchically created virtual inverted structure. NNC is not described in FIGS. 10 and 11, and thus $C_{V1(8)}$ in FIG. 10 is used instead. The sort result is as follows.

$$C_{V1(8)} \cdot INV_{V1} = (D_2, A_0, B_0, C_1, A_2, A_1, B_2, B_0) \cdot (1, 5, 4, 7, 2, 6, 3, 0) = (A_0, A_1, A_2, B_0, B_0, B_2, C_1, D_2)$$

From the above result, it is found that sorting is performed. In addition, "A" and "B" in $C_{0(3)}$ come before those in $C_{1(2)}$ and $C_{2(3)}$, even if the same "A", "B", and "C" appear in the sort result. This is because the rule that the value in the lower column number has a smaller value when the values are the same is reflected. Additionally, no new storage area is required to hold the sort result, which is the same as the D5A index.

•Searching with Virtual Index of Hierarchically Created Virtual Tabular Data

Searching using a virtual index that uses a hierarchically created virtual inverted structure is performed. NNC is not described in FIGS. 10 and 11, and thus $C_{V1(8)}$ in FIG. 10 is used instead. The searching is performed under the conditions B to C.

As $i_0 = 3$ and $i_1 = 5$ in Equation (8), $(INV_{(R)}{}^{(R)}[ACM_{(K)}[i_0-1]], ..., INV_{(R)}{}^{(R)}[ACM_{(K)}[i_1]-1]) = (7, 2, 6, 3)$. Therefore, the search result is as follows.

$$C_{V1(8)} \cdot (7, 2, 6, 3) = (D_2, A_0, B_0, C_1, A_2, A_1, B_2, B_0) \cdot (7, 2, 6, 3) = (B_0, B_0, B_2, C_1)$$

Additionally, it requires only a small amount of storage space to hold the retrieval result, which is the same as the D5A index, because it requires only to hold $i_0$ and $i_1$.

•Aggregation Using Virtual Index of Hierarchically Created Virtual Tabular Data

Aggregation is performed using a virtual index that uses a hierarchically created virtual inverted structure. The i-th value "value" of the aggregation result is given by Information 2 above, and the number of occurrences "count" of the i-th value of the aggregation result is given by Equation (8). When aggregation is performed according to this, the result is as indicated in Table 2 below.

[Table 2]

| $i$ | value | count | Remarks |
|---|---|---|---|
| 0 | $A_0$ | 1 | From $C_{0(3)}$ |
| 1 | $A_1$ | 1 | From $C_{1(2)}$ |
| 2 | $A_2$ | 1 | From $C_{2(3)}$ |
| 3 | $B_0$ | 2 | From $C_{0(3)}$ |
| 4 | $B_2$ | 1 | From $C_{2(3)}$ |
| 5 | $C_1$ | 1 | From $C_{1(2)}$ |
| 6 | $D_2$ | 1 | From $C_{2(3)}$ |

Here, even if the same value is provided by different D5A, the aggregation result is obtained separately. Therefore, a user who prefers it keeps it as it is, and a user who does not prefer it needs to sum up the number of occurrences for the same value. Even in this case, the sum does not exceed the number of D5As at most, and thus the processing time required for this is not large. Additionally, no additional storage is required to hold the aggregation result, which is the same as the D5A index.

<<Understanding Virtual Index through Spectral Decomposition>>

It is easy to understand when $C_{0(3)}$, $C_{1(2)} \rightarrow C_{V0(5)}$ and $C_{V0(5)}$, $C_{2(3)} \rightarrow C_{V1(8)}$ in FIG. 11 are interpreted from the viewpoint of the spectral decomposition. For the sake of clarity, all of the following equations are written in the form after INV is read as INV' using the assignment mapping.

$C_{0(3)}$ and $C_{1(2)}$ are expressed by the spectral decomposition as follows.

$$C_{0(3)} = A_0{:}(3) + B_0{:}(2, 0)$$

$$C_{1(2)} = A_1{:}(4) + C_1(1)$$

Therefore, $C_{V0(5)}$ can be expressed as follows.

$$C_{V0(5)} = C_{0(3)} + C_{1(2)} = A_0{:}(3) + A_1{:}(4) + B_0{:}(2, 0) + C_1(1)$$

Additionally, $C_{V0(5)}$ and $C_{2(3)}$ can be expressed as follows.

$$C_{V0(5)} = A_0{:}(1) + A_1{:}(5) + B_0{:}(7, 2) + C_1(3)$$

$$C_{2(3)} = A_2{:}(4) + B_2{:}(6) + D_2{:}(0)$$

Therefore, $C_{V1(8)}$ can be expressed as follows.

$$C_{V1(8)} = C_{V0(5)} + C_{2(3)} = A_0{:}(1) + A_1{:}(5) + A_2{:}(4) + B_0{:}(7, 2) + B_2{:}(6) + C_1(3) + D_2{:}(0)$$

Therefore, the sort result column is (1, 5, 4, 7, 2, 6, 3, 0). Additionally, the retrieval result column of "B" to "C" is (7, 2, 6, 3). Aggregation can be performed in substantially the same manner as in Table 3 above. Therefore, in the case of manual calculation, calculation by spectral decomposition is easy to understand and superior.

< Overall Configuration Example of System Including Data Processing Device 10 >

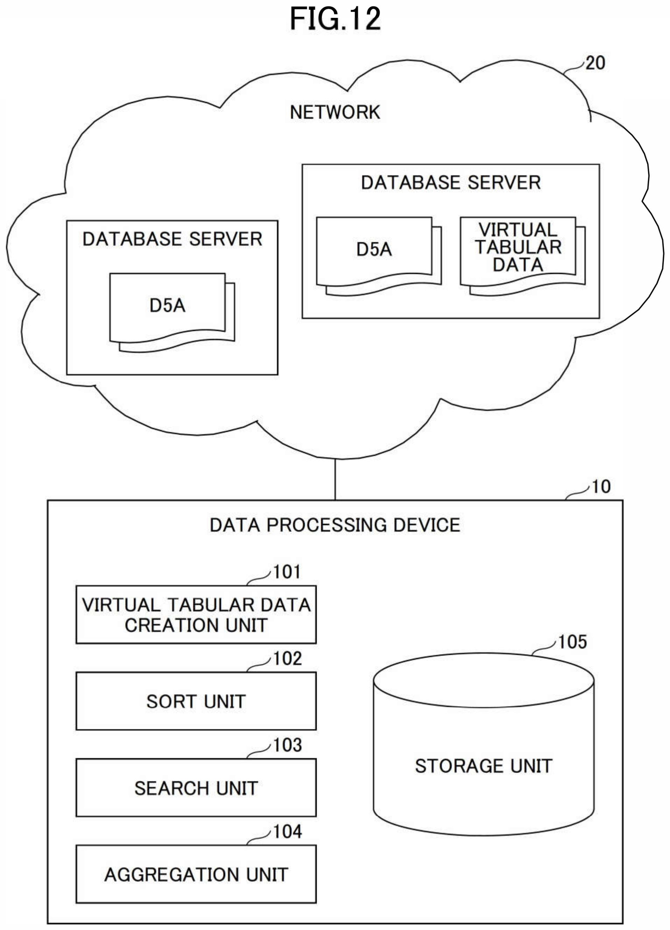

An overall configuration example of a system including a data processing device 10 according to the present embodiment is illustrated in FIG. 12. As illustrated in FIG. 12, the data processing device 10 according to the present embodiment is communicably connected to database servers distributed on a network 20 such as the Internet. At least one of D5A or virtual tabular data are stored in these database servers.

Here, the data processing device 10 according to the present embodiment includes a virtual tabular data creation unit 101, a sort unit 102, a search unit 103, an aggregation unit 104, and a storage unit 105. Here, the virtual tabular data creation unit 101, the sort unit 102, the search unit 103, and the aggregation unit 104 are realized by, for example, processing executed by a processor such as a central processing unit (CPU). One or more programs installed in the data processing device 10 cause the processor to execute processing. Additionally, the storage unit 105 is realized by, for example, a hard disk drive (HDD), a solid state drive (SSD), a flash memory, or the like.

The virtual tabular data creation unit 101 creates virtual tabular data having the information in 1 to 5 described in "Method of Configuring Virtual Tabular Data" above. Additionally, when defining the interval mapping in 5 described in "Method of Configuring Virtual Tabular Data" above, the virtual tabular data creation unit 101 determines whether the assignment destinations of the interval mapping (assignment mapping) collide by the method described in "Collision Detection of Assignments from Different Intervals".

The sort unit 102 performs a sort on the virtual tabular data with the virtual index using the virtual inverted structure described above. For example, the sort unit 102 uses a virtual column to be sorted in the virtual tabular data and a virtual INV included in the virtual inverted structure of the virtual column to calculate a sort result by the index operation of these columns.

When receiving the search condition, the search unit 103 performs searching with the virtual index using the virtual inverted structure of the virtual tabular data described above. For example, the search unit 103 uses a virtual column to be searched in the virtual tabular data, a search condition for the virtual column, and a virtual INV and a virtual ACM included in the virtual inverted structure of the virtual column to calculate Equations (8) and (10), and then calculates a search result by the index operation of the virtual column and the calculation results of Equations (8) and (10).

The aggregation unit 104 performs aggregation with a virtual index using the virtual inverted structure of the virtual tabular data described above. For example, the aggregation unit 104 uses the virtual inverted structure of the virtual column to be aggregated in the virtual tabular data to perform aggregation by the Information 2 described above and Equation (8).

The storage unit 105 stores various data (for example, the virtual tabular data, D5A, the sort result, the search result, the aggregation result, and the like).

<Hardware Configuration Example of Data Processing Device 10 >

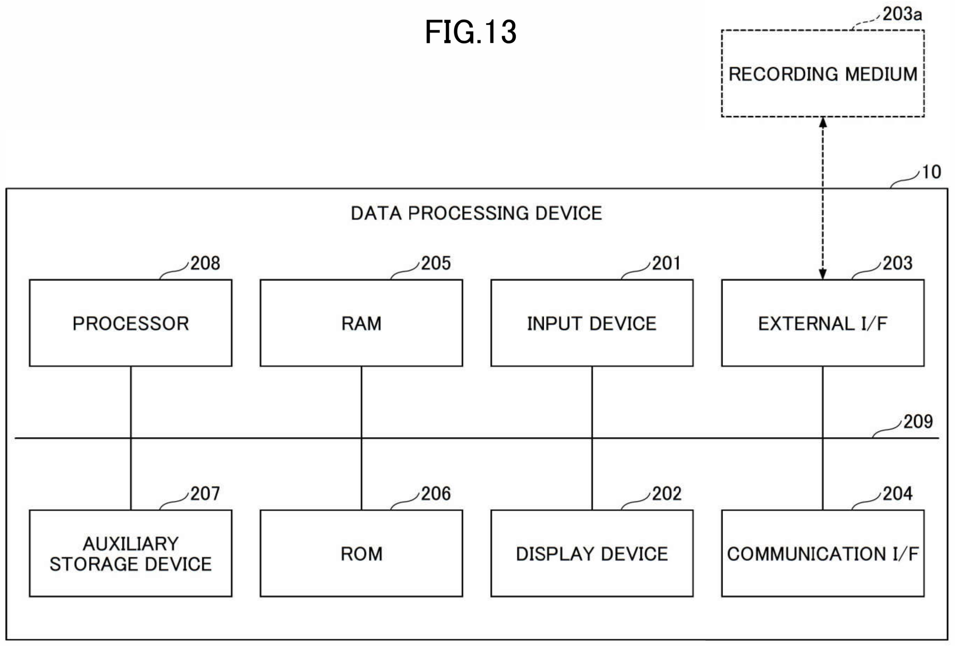

A hardware configuration example of the data processing device 10 according to the present embodiment is illustrated in FIG. 13. As illustrated in FIG. 13, the data processing device 10 according to the present embodiment includes an input device 201, a display device 202, an external I/F 203, a communication I/F 204, a random access memory (RAM) 205, a read only memory (ROM) 206, an auxiliary storage device 207, and a processor 208. Each of these hardware components is communicably connected via a bus 209.

The input device 201 is, for example, a keyboard, a mouse, a touch panel, a physical button, and the like. The display device 202 is, for example, a display, a display panel, or the like. Here, the data processing device 10 need not include, for example, at least one of the input device 201 or the display device 202.

The external I/F 203 is an interface with an external device such as a recording medium 203a. Examples of the recording medium 203a include a compact disc (CD), a digital versatile disk (DVD), a secure digital memory card (SD memory card), a universal serial bus (USB) memory card, and the like.

The communication I/F 204 is an interface for connecting the data processor 10 to the network 20. The RAM 205 is a volatile semiconductor memory (storage device) that temporarily holds programs and data. The ROM 206 is a nonvolatile semiconductor memory (storage device) that can hold programs and data even when the power is turned off. The auxiliary storage device 207 is, for example, a nonvolatile storage device, such as an HDD, an SSD, or a flash memory. The processor 208 is, for example, a computing device such as a CPU.

Here, the hardware configuration illustrated in FIG. 13 is an example, and the data processing device 10 may have other hardware configurations. For example, the data processing device 10 may include a plurality of auxiliary storage devices 207 and a plurality of processors 208, need not include a part of the illustrated hardware, or may include various hardware other than the illustrated hardware.

<Flow of Virtual Tabular Data Creation Process>

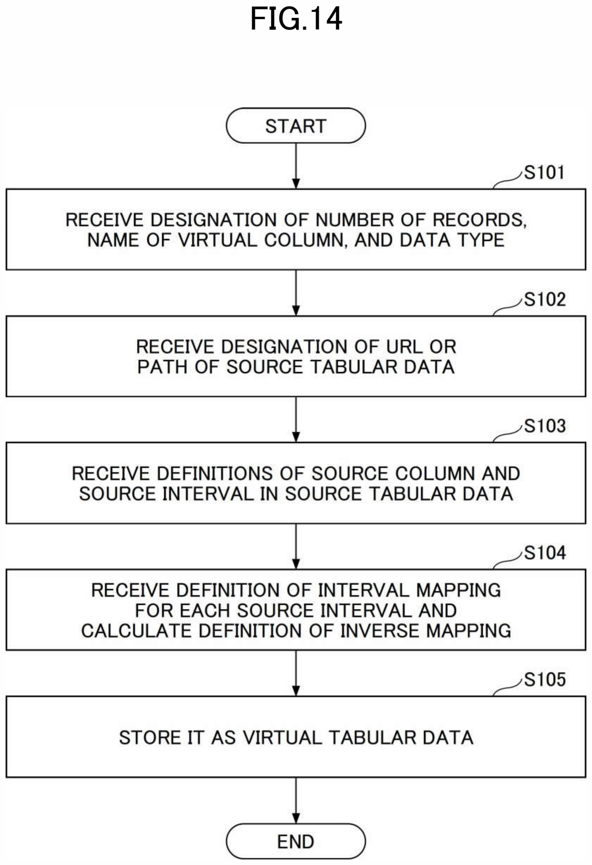

A flow of a virtual tabular data creation process will be described below with reference to FIG. 14.

Step S101: First, the virtual tabular data creation unit 101 receives a designation of the number of records of the virtual tabular data, the names of the virtual columns, and the data types (the information in 1 and 2 described in "Method of Configuring Virtual Tabular Data" above). Here, the number of records of the virtual tabular data, the names of the virtual columns, and the data types are designated, for example, by the user.

Step S102: Next, the virtual tabular data creation unit 101 receives a designation of the URL or path of one or more source tabular data (the information in 3 described in "Method of Configuring Virtual Tabular Data" above). Here, the URL or path of one or more source tabular data is designated, for example, by the user. Additionally, the URL or path of one or more columns included in one or more source tabular data may be designated.

Step S103: Next, the virtual tabular data creation unit 101 receives the definitions of the source columns and source intervals in each source tabular data (the information in 4 described in the "Method of Constructing Virtual Tabular Data" above). Here, the definitions of the source columns and source intervals in each source tabular data are designated, for example, by the user.

Step S104: Next, the virtual tabular data creation unit 101 receives the definitions of the interval mappings for each source interval (the information in 5 described in "Method of Constructing Virtual Tabular Data" above), and calculates the definition of the inverse mapping. The definitions of the interval mapping and its inverse mapping for each source interval are designated, for example, by the user. Additionally, when the interval mapping is defined, their inverse mappings are automatically determined by Equations (12) and (14), and is stored in the storage unit 105.

Step S105: Finally, the virtual tabular data creation unit 101 stores the information received in steps S101 to S104 as the virtual tabular data in the storage unit 105.

<Flow of Sort Process in Virtual Tabular Data >

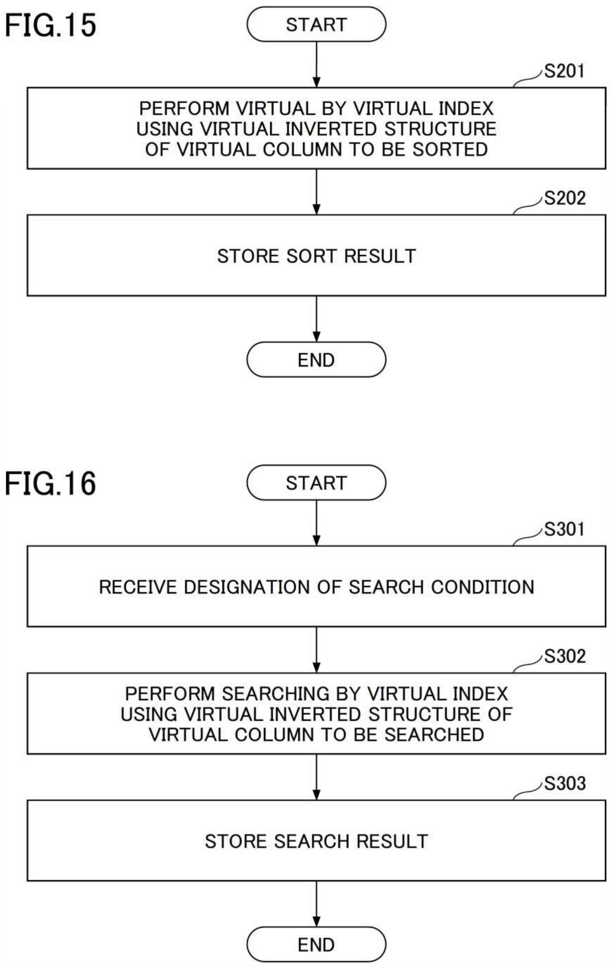

A flow of the sort process in the virtual tabular data will be described below with reference to FIG. 15.

Step S201: The sort unit 102 performs sorting with the virtual index using the virtual inverted structure of the virtual column to be sorted among the virtual columns of the virtual tabular data.

Step S202: Then, the sort unit 102 stores the sort results in step S201 in the storage unit 105. However, the sort unit 102 need not store the sort result.

<Flow of Searching Process in Virtual Tabular Data >

A flow of a searching process in the virtual tabular data will be described below with reference to FIG. 16.

Step S301: First, the search unit 103 receives retrieval conditions.

Step S302: Next, the search unit 103 performs searching with the virtual index using the virtual inverted structure of the virtual column to be searched among the virtual columns of the virtual tabular data.

Step S303: Then, the search unit 103 stores the search results in step S302 in the storage unit 105.

<Flow of Aggregation Process in Virtual Tabular Data>

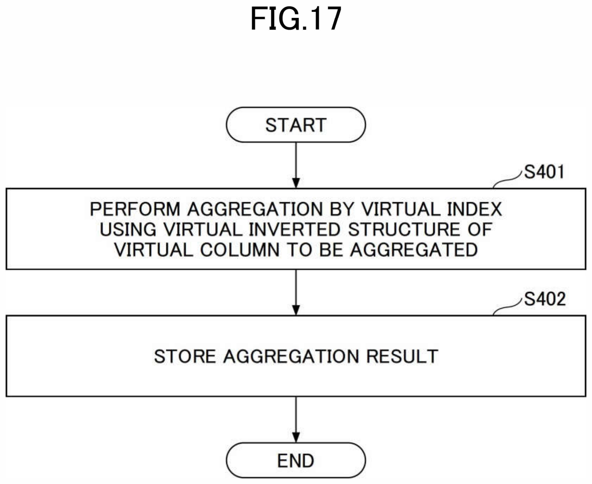

A flow of an aggregation process in the virtual tabular data will be described below with reference to FIG. 17.

Step S401: The aggregation unit 104 performs aggregation with the virtual index using the virtual inverted structure of the virtual column to be aggregated among the virtual columns of the virtual tabular data.

Step S402: Then, the aggregation unit 104 stores the aggregation result in step S303 in the storage unit 105. However, the aggregation unit 104 need not store the aggregation result.

<Summary>

As described above, in the data processing device 10 according to the present embodiment, new virtual tabular data can be defined by assignment mappings using D5As or already defined virtual tabular data as source tabular data. Moreover, such virtual tabular data enables sorting, searching, and aggregation to be performed at high speed using virtual indexes.

Therefore, for example, various virtual tabular data can be hierarchically created starting from D5As of the original tabular data, and sorting, searching, and aggregation of these virtual tabular data can also be performed at high speed. Additionally, a user can create new virtual tabular data from D5As or virtual tabular data that have previously been published and publish it according to their own purposes.

<Supplement>

Hereinafter, as a supplement, the reason why index inheritance is possible in the present embodiment while that is not possible in the existing technology will be described.

An index is realized by a set of data structures for the index and algorithms that use the data structures to accelerate processing. The inverted structure can be regarded as the data structure for the index that accelerate sorting, searching, and aggregation. A virtual inverted structure for a column can be created by rearranging elements of a column from the inverted structure. Additionally, a virtual inverted structure can be created from multiple inverted structures. Furthermore, multiple virtual inverted structures can be hierarchically composed to further create a virtual inverted structure. As described, the virtual inverted structure can be created hierarchically or by rearranging the elements of the column. The algorithm of the index using the inverted structure can also be applied to the virtual inverted structure, which becomes the virtual index. An existing index does not have a data structure for an index that can be established by combining multiple structures or combining them hierarchically, as is possible with the inverted structure, and thus inheritance is not possible when combining or hierarchically structuring.

The present invention is not limited to the above-described embodiments specifically disclosed, and various modifications, changes, combinations with known techniques, and the like can be made without departing from the scope of the claims.

This application is based on Basic Application No. 2023-010716 and Basic Application No. 2023-010717, filed in Japan on January 27, 2023, the entire contents of which are incorporated by reference herein.

Description of reference symbols

10      data processing device

20          network
101        virtual tabular data creation unit
102        sort unit
103        search unit
104        aggregation unit
105        storage unit
201        input device
202        display device
203        external I/F

203a    recording medium
204    communication I/F
205    RAM
206    ROM
207    auxiliary storage
208    processor
209    bus

**Claims**

1.  A data processing device comprising a data operation unit configured to perform, on virtual tabular data including a virtual column having a second data structure obtained by converting a first data structure of one or more columns included in one or more tabular data by a predetermined mapping, a sort operation, a search operation, or an aggregation operation using the second data structure as an index.

2.  The data processing device as claimed in claim 1, wherein the one or more tabular data includes virtual tabular data including a virtual column having the second data structure.

3.  The data processing device as claimed in claim 1, wherein the one or more tabular data includes: D5A including an SVL, an INV, and an ACM, the SVL being an array holding values of each of the one or more columns in ascending order, the INV being an array holding inverted record numbers of the values of each of the one or more columns, and the ACM being an array holding a correspondence relationship between the SVL and the INV; and the virtual tabular data.

4.  The data processing device as claimed in claim 3, wherein the one or more tabular data further includes the one or more columns.

5.  The data processing device as claimed in claim 3, wherein the one or more tabular data further includes an NNC, the NNC being an array holding natural numbers obtained by replacing the values of each of the one or more columns with positions on the SVL.

6.  The data processing device as claimed in any one of claims 3 to 5, wherein the data operation unit performs the sort operation, using an INV included in the second data structure related to a column to be sorted in the virtual tabular data, by successively acquiring values of the column to be sorted.

7.  The data processing device as claimed in any one of claims 3 to 5, wherein the data operation unit performs the search operation by obtaining, using an INV and an ACM included in the second data structure relating to a column to be searched in the virtual tabular data and values v0 and v1 given as a search condition, $(INV[ACM[i_0-1]], ..., INV[ACM[i_1]-1])$ from smallest $i_0$ satisfying $v0 \le SVL[i_0]$ and largest $i_1$ satisfying $SVL[i_1] \le i_1$ as a search result.

8.  The data processing device as claimed in any one of claims 3 to 5, wherein the data operation unit performs the aggregation operation by calculating, using an SVL and an ACM included in the second data structure relating to a column to be aggregated in the virtual tabular data, an aggregation result of an i-th element of an SVL in the virtual tabular data by $ACM[i] - ACM[i-1]$.

9.  A data processing method performed by a computer, the data processing method comprising a data operation procedure of performing, on virtual tabular data including a virtual column having a second data structure obtained by converting a first data structure of one or more columns included in one or more tabular data by a predetermined mapping, a sort operation, a search operation, or an aggregation operation using the second data structure as an index.

10. A program causing a computer to perform a data operation procedure of performing, on virtual tabular data including a virtual column having a second data structure obtained by converting a first data structure of one or more columns included in one or more tabular data by a predetermined mapping, a sort operation, a search operation, or an aggregation operation using the second data structure as an index.

11. A data processing device comprising:

a reception unit configured to receive designation of a number of records of virtual tabular data to be created, a virtual column representing a column of the virtual tabular data, one or more tabular data, and one or more columns included in the one or more tabular data; and

an assignment mapping definition unit configured to create the virtual tabular data by assigning, to the virtual column, a second data structure obtained by converting a first data structure of the one or more columns included in the one or more tabular data by a predetermined mapping.

12. The data processing device as claimed in claim 11, further comprising a display unit configured to display, on the virtual column of the virtual tabular data, values of the one or more columns.

13. The data processing device as claimed in claim 11 or 12, wherein the mapping includes a linear functional mapping in which a correspondence relationship between the first data structure and the second data structure is expressed by a linear function, and an enumerated mapping in which the correspondence relationship between the first data structure and the second data structure is expressed by an enumeration of the correspondence relationship.

14. The data processing device as claimed in claim 13, further comprising a collision determination unit configured to determine whether second data structures respectively converted by different mappings collide with respect to different first data structures.

15. The data processing device as claimed in claim 14, wherein the collision determination unit is configured to:

when any two of the different mappings are $F_0$ and $F_1$,
determine that a second data structure of a conversion destination of the mapping $F_0$ and a second data structure of a conversion destination of the mapping $F_1$ do not collide, when a range of the mapping $F_0$ and a range of the mapping $F_1$ are not on a same virtual column;
determine that the second data structure of the conversion destination of the mapping $F_0$ and the second data structure of the conversion destination of the mapping $F_1$ do not collide, when $v_0 + w_0 - 1 < v_1$ is satisfied, where an index representing a start position of an interval representing the range of the mapping $F_0$ is $v_0$, a length of an interval representing a domain of the mapping $F_0$ is $w_0$, an index representing a start position of an interval representing a range of the mapping $F_1$ is $v_1$; and
determine that the second data structure of the conversion destination of the mapping $F_0$ and the second data structure of the conversion destination of the mapping $F_1$ do not collide, when $v_1 + w_1 - 1 < v_0$ is satisfied, where a length of an interval representing a domain of the mapping $F_1$ is $w_1$.

16. The data processing device as claimed in claim 15, wherein the collision determination unit is configured to:

determine that the second data structure of the conversion destination of the mapping $F_0$ and the second data structure of the conversion destination of the mapping $F_1$ do not collide, in a case where $L_0'[i] = L_1'[j]$ is not satisfied for each i and j, when each of the mapping $F_0$ and the mapping $F_1$ is the enumerated mapping, the length of the interval representing the domain of the mapping $F_0$ is $w_0$, the length of the interval representing the domain of the mapping $F_1$ is $w_1$, $L_0 = (v_0, ..., v_0+w_0-1)$ and $L_1 = (v_1, ..., v_1+w_1-1)$, and common ranges $L_0'$ and $L_1'$ of $L_0$ and $L_1$ are obtained;
determine that the second data structure of the conversion destination of the mapping $F_0$ and the second data structure of the conversion destination of the mapping $F_1$ do not collide, in a case where $y_0 = y_1$ is not established for $x_0$ and $x_1$ of $x_0 \leq MinInt(N_0-1, LCM(a_0, a_1) \text{ div } a_0)$ and $x_1 \leq MinInt(N_1-1, LCM(a_0, a_1) \text{ div } a_1)$, when each of the mapping $F_0$ and the mapping $F_1$ is the linear functional mapping, the mapping $F_0$ is rewritten with $y_0 = a_0 \times x_0 + b_0$; $x_0 = 0, 1, 2, ..., N_0-1$ whose range is a common part between the range of the mapping $F_0$ and the range of the mapping $F_1$, and the mapping $F_1$ is rewritten with $y_1 = a_1 \times x_1 + b_1$; $x_1 = 0, 1, 2, ..., N_1-1$ whose range is the common part; and
determine that the second data structure of the conversion destination of the mapping $F_0$ and the second data structure of the conversion destination of the mapping $F_1$ do not collide, in a case where $y_0(n) = y_1(m)$ is not established for each n and m, when the mapping $F_0$ is the linear functional mapping and the mapping $F_1$ is the enumerated mapping, the mapping $F_0$ is rewritten with $y_0(n) = a_0 \times n + b_0$; $x_0 = 0, 1, 2, ..., N-1$ whose range is the common part between the range of the mapping $F_0$ and the range of the mapping $F_1$, and the mapping $F_1$ is rewritten with $yi(m) = (v_1, ..., v_1+w_1-1)[m]$ whose range is the common part.

17. The data processing device as claimed in claim 16, wherein the first data structure and the second data structure are data structures including at least an INV representing an array having inverted record numbers as elements.

18. A data processing method performed by a computer, the data processing method comprising:

a reception procedure of receiving designation of a number of records of virtual tabular data to be created, a virtual column representing a column of the virtual tabular data, one or more tabular data, and one or more columns included in the one or more tabular data; and
an assignment mapping definition procedure of creating the virtual tabular data by assigning, to the virtual column, a second data structure obtained by converting a first data structure of the one or more columns included in the one or more tabular data by a predetermined mapping.

19. A program causing a computer to perform:

a reception procedure of receiving designation of a number of records of virtual tabular data to be created, a virtual column representing a column of the virtual tabular data, one or more tabular data, and one or more columns included in the one or more tabular data; and
an assignment mapping definition procedure of creating the virtual tabular data by assigning, to the virtual column, a second data structure obtained by converting a first data structure of the one or more columns included in the one or more tabular data by a predetermined mapping.

FIG.1

DAILY DATA FOR EACH REGION ⇒ WEEKLY DATA FOR EACH REGION ⇒ WEEKLY DATA FOR ALL REGIONS

TOKYO  OSAKA  NAGOYA

SUNDAY
MONDAY
TUESDAY
WEDNESDAY
THURSDAY
FRIDAY
SATURDAY

TABULAR DATA THAT STORES VALUES: D5A FILE

TOKYO  OSAKA  NAGOYA

VIRTUAL TABULAR DATA THAT INHERITS VALUES FROM D5A

TOKYO  OSAKA  NAGOYA

VIRTUAL TABULAR DATA THAT INHERITS VALUES FROM VIRTUAL TABULAR DATA

: D5A THAT STORES ACTUAL VALUES

: VIRTUAL TABULAR DATA THAT ACCEPTS MAPPING

EP 4 657 274 A1

# FIG.2

ONE-DIMENSIONAL ARRAY

| | |
|---|---|
| 0 | 4 |
| 1 | 0 |
| 2 | 6 |
| 3 | 3 |

DOMAIN

RANGE

# FIG.3

ONE-DIMENSIONAL ARRAY

| | |
|---|---|
| 0 | Bob |
| 1 | Alice |
| 2 | Cathy |
| 3 | Bob |

DOMAIN

RANGE

# FIG.4

CSV FORMAT

$C_{(4)}$

| | | |
|---|---|---|
| 0 | Bob | |
| 1 | Alice | |
| 2 | Cathy | |
| 3 | Bob | |

...

D5A FORMAT

$NNC_{(4)}$

| | |
|---|---|
| 0 | 1 |
| 1 | 0 |
| 2 | 2 |
| 3 | 1 |

$SVL_{(3)}$

| | |
|---|---|
| 0 | Alice |
| 1 | Bob |
| 2 | Cathy |

$ACM_{(3)}$

| | |
|---|---|
| 0 | 1 |
| 1 | 3 |
| 2 | 4 |

$INV_{(4)}$

| | |
|---|---|
| 0 | 1 |
| 1 | 0 |
| 2 | 3 |
| 3 | 2 |

...

------ : STRUCTURE FOR OBTAINING COLUMN VALUE

—·—·— : STRUCTURE FOR D5A INDEX

# FIG.5

# FIG.6

SOURCE COLUMN

VIRTUAL COLUMN

$F$

$F^{-1}$

INTERVAL Q

INTERVAL V

Rs

Rv

$q$

$rs$

$q+u-1$

$v$

$rv$

$v+w-1$

Rv-1

EP 4 657 274 A1

FIG.7

FIG.8

# FIG.9

INVERTED STRUCTURE OF SOURCE COLUMN #0

VIRTUAL INVERTED STRUCTURE

INVERTED STRUCTURE OF SOURCE COLUMN #1

# FIG.10

$F(C_{V0(5)} \rightarrow C_{V1(8)}) = (2,3,7,1,5)$

$F(C_{0(3)} \rightarrow C_{V0(5)}) = (2,3,0)$

$F(C_{1(2)} \rightarrow C_{V0(5)}) = (4,1)$

$F(C_{2(3)} \rightarrow C_{V1(8)}) = (0,6,4)$

FIG.11

# FIG.12

# FIG.13

EP 4 657 274 A1

# FIG.14

START

S101

RECEIVE DESIGNATION OF NUMBER OF RECORDS,
NAME OF VIRTUAL COLUMN, AND DATA TYPE

S102

RECEIVE DESIGNATION OF URL OR
PATH OF SOURCE TABULAR DATA

S103

RECEIVE DEFINITIONS OF SOURCE COLUMN AND
SOURCE INTERVAL IN SOURCE TABULAR DATA

S104

RECEIVE DEFINITION OF INTERVAL MAPPING
FOR EACH SOURCE INTERVAL AND
CALCULATE DEFINITION OF INVERSE MAPPING

S105

STORE IT AS VIRTUAL TABULAR DATA

END

## FIG.15

START

S201
PERFORM VIRTUAL BY VIRTUAL INDEX
USING VIRTUAL INVERTED STRUCTURE
OF VIRTUAL COLUMN TO BE SORTED

S202
STORE SORT RESULT

END

## FIG.16

START

S301
RECEIVE DESIGNATION OF SEARCH CONDITION

S302
PERFORM SEARCHING BY VIRTUAL INDEX
USING VIRTUAL INVERTED STRUCTURE OF
VIRTUAL COLUMN TO BE SEARCHED

S303
STORE SEARCH RESULT

END

# FIG.17

```
                    ┌──────────────┐
                    │    START     │
                    └──────┬───────┘
                           │              ⟋S401
         ┌─────────────────▼────────────────────┐
         │  PERFORM AGGREGATION BY VIRTUAL INDEX │
         │  USING VIRTUAL INVERTED STRUCTURE OF  │
         │   VIRTUAL COLUMN TO BE AGGREGATED     │
         └─────────────────┬────────────────────┘
                           │              ⟋S402
         ┌─────────────────▼────────────────────┐
         │                                       │
         │        STORE AGGREGATION RESULT       │
         │                                       │
         └─────────────────┬────────────────────┘
                           │
                    ┌──────▼───────┐
                    │     END      │
                    └──────────────┘
```

**EP 4 657 274 A1**

## INTERNATIONAL SEARCH REPORT

| International application No. |
|---|
| **PCT/JP2024/000399** |

**A.    CLASSIFICATION OF SUBJECT MATTER**

*G06F 16/22*(2019.01)i

FI:    G06F16/22

According to International Patent Classification (IPC) or to both national classification and IPC

**B.    FIELDS SEARCHED**

Minimum documentation searched (classification system followed by classification symbols)

G06F16/22

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2013-117873 A (HITACHI SYSTEMS LTD.) 13 June 2013 (2013-06-13) | 1-2, 9-12, 18-19 |
| | paragraph [0018] | |
| Y | paragraph [0018] | 3-8 |
| A | paragraph [0018] | 13-17 |
| Y | WO 2023/276162 A1 (FURUSHO, Shinji) 05 January 2023 (2023-01-05) | 3-8 |
| | paragraphs [0011], [0012], [0075], [0076] | |
| A | JP 2015-207026 A (TURBO DATA LAB KK) 19 November 2015 (2015-11-19) | 1-19 |
| | entire text, all drawings | |

☐ Further documents are listed in the continuation of Box C.    ☑ See patent family annex.

| | | |
|---|---|---|
| * | Special categories of cited documents: | "T"    later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X"    document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"    document member of the same patent family |

| Date of the actual completion of the international search | Date of mailing of the international search report |
|---|---|
| **22 March 2024** | **02 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/000399**

| Patent document cited in search report | | | Publication date (day/month/year) | Patent family member(s) | | Publication date (day/month/year) |
|---|---|---|---|---|---|---|
| JP | 2013-117873 | A | 13 June 2013 | (Family: none) | | |
| WO | 2023/276162 | A1 | 05 January 2023 | (Family: none) | | |
| JP | 2015-207026 | A | 19 November 2015 | WO | 2014/034383 A1 | |

Form PCT/ISA/210 (patent family annex) (July 2022)

**REFERENCES CITED IN THE DESCRIPTION**

**Patent documents cited in the description**

- JP 2023010716 A

- JP 2023010717 A